(19) Europäisches Patentamt / European Patent Office / Office européen des brevets

(11) **EP 4 303 781 A1**

(12) **EUROPEAN PATENT APPLICATION**
published in accordance with Art. 153(4) EPC

(43) Date of publication:
**10.01.2024 Bulletin 2024/02**

(21) Application number: **22773977.8**

(22) Date of filing: **24.02.2022**

(51) International Patent Classification (IPC):
**G06N 20/00** (2019.01)

(52) Cooperative Patent Classification (CPC):
**G06N 3/04; G06N 3/08; G06N 20/00**

(86) International application number:
**PCT/CN2022/077733**

(87) International publication number:
**WO 2022/199315 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2021 CN 202110304438**

(71) Applicant: **Huawei Technologies Co., Ltd.**
**Shenzhen, Guangdong 518129 (CN)**

(72) Inventors:
- **WANG, Jian**
  **Shenzhen, Guangdong 518129 (CN)**
- **HUANGFU, Yourui**
  **Shenzhen, Guangdong 518129 (CN)**
- **LI, Rong**
  **Shenzhen, Guangdong 518129 (CN)**
- **WANG, Jun**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **DATA PROCESSING METHOD AND APPARATUS**

(57)    This application provides a data processing method and apparatus, to reduce calculation complexity and a calculation amount of a neural network. This improves data processing efficiency. The data processing method and apparatus may be applied to a node such as a first node in a communication system. The first node has an adjacent relationship with a second node, and the first node and the second node are configured to execute a same type of task. The method includes: obtaining first data, and determining a processing result of the first data through a first neural network, where the first neural network is determined based on a combination of first neural network parameter sets, and a quantity of first neural network parameter sets in the combination is positively correlated to a quantity of second nodes.

FIG. 2

EP 4 303 781 A1

## Description

This application claims priority to Chinese Patent Application No. 202110304438.9, filed with the China National Intellectual Property Administration on March 22, 2021 and entitled "DATA PROCESSING METHOD AND APPARATUS", which is incorporated herein by reference in its entirety.

## TECHNICAL FIELD

This application relates to the field of communication, and in particular, to a data processing method and apparatus.

## BACKGROUND

With development of an artificial intelligence (artificial intelligence, AI) technology, a neural network may be deployed in a device cluster manner. For example, a complete neural network may be deployed on each node in the device cluster, and a network scale of the complete neural network matches a cluster scale. In this way, each node may independently train the complete neural network, and complete a corresponding cluster service by using the trained complete neural network.

However, because the complete neural network is deployed on each node, calculation complexity of the neural network is high, a calculation amount is large, and data processing efficiency is low.

## SUMMARY

Embodiments of this application provide a data processing method and apparatus, to reduce calculation complexity and a calculation amount of a neural network. This improves data processing efficiency.

To achieve the foregoing objectives, the following technical solutions are used in this application.

According to a first aspect, a data processing method is provided. The method is applied to a first node. The first node has an adjacent relationship with a second node, and the first node and the second node are configured to execute a same type of task. The method includes: obtaining first data, and determining a processing result of the first data through a first neural network. The first neural network is determined based on a combination of first neural network parameter sets. A quantity of first neural network parameter sets in the combination is positively correlated to a quantity of second nodes.

Based on the method according to the first aspect, a plurality of nodes may execute the same type of task, and the first node may determine the quantity of first neural network parameter sets based on a quantity of neighboring nodes in the plurality of nodes, for example, the quantity of second nodes, to further determine the first neural network. A network scale of the first neural network may be positively correlated to the quantity of second nodes, to cooperate with the second node to execute the same type of task. For example, because a network scale of a complete neural network matches a cluster scale, to be specific, matches a quantity of nodes in a device cluster, when the quantity of neighboring nodes is less than the quantity of nodes in the device cluster, the network scale of the first neural network is also less than the network scale of the complete neural network. Therefore, calculation complexity and a calculation amount of the neural network may be reduced, and data processing efficiency may be improved.

In a possible design solution, the first neural network may include: N hidden layers. An $i^{th}$ hidden layer may include $M_i$ parameter subsets. In the $M_i$ parameter subsets, m parameter subsets may be the same. The $M_i$ parameter subsets may be determined based on the combination of first neural network parameter sets. N is a positive integer, i is a positive integer less than or equal to N, M is an integer greater than 1, and m is an integer less than or equal to $M_i$ and greater than 1. In other words, the first neural network may be determined based on a combination of same parameter subsets. In this way, the calculation amount may be effectively reduced, to quickly determine the first neural network.

Optionally, the first neural network parameter set may include: a first parameter subset and/or a second parameter subset. In other words, the first neural network may be determined based on a combination of two parameter subsets. In this way, the calculation amount may be further reduced, to determine the first neural network more quickly.

Further, a neural network structure of the $i^{th}$ hidden layer may be represented as:

$$\mathbf{W}^{i-1,i} = \begin{bmatrix} \mathbf{S}^{i-1,i} & \mathbf{O}^{i-1,i} & \dots & \mathbf{O}^{i-1,i} \\ \mathbf{O}^{i-1,i} & \mathbf{S}^{i-1,i} & \dots & \mathbf{O}^{i-1,i} \\ \vdots & \vdots & \ddots & \vdots \\ \mathbf{O}^{i-1,i} & \mathbf{O}^{i-1,i} & \dots & \mathbf{S}^{i-1,i} \end{bmatrix}$$

$W^{i-1,i}$ may be used to represent the neural network structure of the $i^{th}$ hidden layer. $S^{i-1,i}$ may be determined based on the first parameter subset corresponding to the $i^{th}$ hidden layer, and $O^{i-1,i}$ may be determined based on the second parameter subset corresponding to the $i^{th}$ hidden layer. It should be understood that such a symmetric structure of the $i^{th}$ hidden layer may enable the first neural network to have permutation invariance. For example, if an input sequence of the first data changes, a sequence of processing results output by the first neural network also changes accordingly, and the processing result remains unchanged, so that the first neural network may output a correct processing result regardless of a sequence in which the first data is input. Therefore, compared with a neural network not having the permutation invariance, the first neural network having the permutation invariance may omit the step of adjusting the input sequence, to simplify a processing procedure. This may improve data processing efficiency.

Further, a quantity of rows in $W^{i-1,i}$ may be positively correlated to a quantity of second nodes, and a quantity of columns in $W^{i-1,i}$ may be positively correlated to the quantity of second nodes. For example, the quantity of rows in $W^{i-1,i}$ may be equal to a sum of a quantity of first nodes and the quantity of second nodes, and the quantity of columns in $W^{i-1,i}$ may be equal to the sum of the quantity of first nodes and the quantity of second nodes, so that the first node may quickly determine the first neural network based on the sum of the quantity of first nodes and the quantity of second nodes.

In a possible design solution, if the quantity of second nodes changes from a first quantity to a second quantity, in the combination of first neural network parameter sets, a quantity of first parameter subsets may be correspondingly adjusted from a third quantity to a fourth quantity, and a quantity of second parameter subsets may be correspondingly adjusted from a fifth quantity to a sixth quantity. In this way, the network scale of the first neural network may be dynamically adjusted based on a change of the quantity of second nodes, so that the first neural network may be dynamically maintained in an optimal network scale. This avoids network scale redundancy, and further improves data processing efficiency.

In a possible design solution, after determining the processing result of the first data, the method according to the first aspect may further include: determining a second neural network parameter set, and sending the second neural network parameter set. The second neural network parameter set may be determined based on the processing result and the first neural network. For example, the first neural network is updated based on the processing result, to obtain the second neural network parameter set. In this way, training and updating of the first neural network may be implemented, so that precision of the first neural network is higher, and an output processing result is more accurate.

In a possible design solution, the second node may be determined by one or more of the following: an area in which a node is located, a type of a node, a network to which a node belongs, or a user served by a node. In this way, the first node may flexibly adjust the quantity of second nodes based on an actual service requirement, to ensure that the first node and the second node may cooperate to execute the same type of task. This improves task reliability.

According to a second aspect, a data processing method is provided. The method is applied to a first node. The first node has an adjacent relationship with a second node, and the first node and the second node are configured to execute a same type of task. The method includes: obtaining a first neural network parameter set, determining a first neural network based on a combination of first neural network parameter sets, and then determining a processing result of first data through the first neural network. A quantity of first neural network parameter sets in the combination is positively correlated to a quantity of second nodes.

Based on the method according to the second aspect, because a plurality of nodes may execute the same type of task, and the first node may determine a quantity of first neural network parameter sets based on a quantity of neighboring nodes in the plurality of nodes, for example, a quantity of second nodes, to further determine the first neural network. In this way, a network scale of the first neural network may be positively correlated to the quantity of second nodes, to cooperate with the second node to execute the same type of task. For example, when the quantity of neighboring nodes is less than a quantity of nodes in a device cluster, the first neural network is only a part of a complete neural network, and a network scale of the first neural network is also less than a network scale of the complete neural network. Therefore, reduced training complexity and a training calculation amount of the neural network may be reduced, and training efficiency may be improved.

According to a third aspect, a data processing method is provided. The method is applied to a first device. The method includes: determining a first neural network parameter set, and sending the first neural network parameter set. The first neural network is determined based on a combination of first neural network parameter sets. A quantity of first neural network parameter sets in the combination is positively correlated to a quantity of second nodes. The second node has an adjacent relationship with a first node, and the second node and the first node are configured to execute a same type of task.

Based on the method according to the third aspect, because the first neural network is determined based on the combination of first neural network parameter sets, a quantity of parameters in the first neural network parameter set may be less than a quantity of parameters of the first neural network. Compared with sending all neural network parameters of the first neural network, sending the first neural network parameter set may effectively reduce a data communication volume. This improves communication efficiency.

In a possible design solution, after sending the first neural network parameter set, the method according to the third aspect may further include: obtaining a second neural network parameter set. The second neural network parameter set may be determined based on a processing result of first data and the first neural network.

Optionally, after obtaining the second neural network parameter set, the method according to the third aspect may further include: determining a fourth neural network parameter set based on the second neural network parameter set and a third neural network parameter set. The third neural network parameter set may be determined by the second node. The fourth neural network parameter set may be used to update the first neural network. In this way, a training result of the first node and a training result of the second node are aggregated, to accelerate a training speed of the first neural network, so that the first neural network may converge more quickly. This shortens training duration and improves training efficiency. In addition, because both a quantity of parameters in the second neural network parameter set and a quantity of parameters in the third neural network parameter set are less than a quantity of parameters in the first neural network, compared with all neural network parameters of an aggregated neural network, aggregating the parameters in the second neural network parameter set and the parameters in the third neural network parameter set may effectively reduce a calculation amount and improve an aggregation speed.

According to a fourth aspect, a data processing apparatus is provided. The apparatus is applied to a first node. The first node has an adjacent relationship with a second node, and the first node and the second node are configured to execute a same type of task. The apparatus includes: a transceiver module and a processing module. The transceiver module is configured to obtain first data. The processing module is further configured to determine a processing result of the first data through a first neural network. The first neural network is determined based on a combination of first neural network parameter sets. A quantity of first neural network parameter sets in the combination is positively correlated to a quantity of second nodes.

In a possible design solution, the first neural network may include: N hidden layers. An $i^{th}$ hidden layer may include $M_i$ parameter subsets. In the $M_i$ parameter subsets, m parameter subsets may be the same. The $M_i$ parameter subsets may be determined based on the combination of first neural network parameter sets. N is a positive integer, i is a positive integer less than or equal to N, $M_i$ is an integer greater than 1, and m is an integer less than or equal to M and greater than 1.

Optionally, the first neural network parameter set may include: a first parameter subset and/or a second parameter subset.

Further, a neural network structure of the $i^{th}$ hidden layer may be represented as:

$$\mathbf{W}^{i-1,i} = \begin{bmatrix} \mathbf{S}^{i-1,i} & \mathbf{O}^{i-1,i} & \dots & \mathbf{O}^{i-1,i} \\ \mathbf{O}^{i-1,i} & \mathbf{S}^{i-1,i} & \dots & \mathbf{O}^{i-1,i} \\ \vdots & \vdots & \ddots & \vdots \\ \mathbf{O}^{i-1,i} & \mathbf{O}^{i-1,i} & \dots & \mathbf{S}^{i-1,i} \end{bmatrix}$$

$\mathbf{W}^{i-1,i}$ may be used to represent the neural network structure of the $i^{th}$ hidden layer. $\mathbf{S}^{i-1,i}$ may be determined based on the first parameter subset corresponding to the $i^{th}$ hidden layer, and $\mathbf{O}^{i-1,i}$ may be determined based on the second parameter subset corresponding to the $i^{th}$ hidden layer.

Further, a quantity of rows in $\mathbf{W}^{i-1,i}$ may be positively correlated to a quantity of second nodes, and a quantity of columns in $\mathbf{W}^{i-1,i}$ may be positively correlated to the quantity of second nodes.

In a possible design solution, if the quantity of second nodes changes from a first quantity to a second quantity, in the combination of first neural network parameter sets, a quantity of first parameter subsets may be correspondingly adjusted from a third quantity to a fourth quantity, and a quantity of second parameter subsets may be correspondingly adjusted from a fifth quantity to a sixth quantity.

In a possible design solution, after the processing module determines the processing result of the first data, the processing module is further configured to determine a second neural network parameter set. The transceiver module is further configured to send the second neural network parameter set. The second neural network parameter set may be determined based on the processing result and the first neural network.

In a possible design solution, the second node may be determined by one or more of the following: an area in which a node is located, a type of a node, a network to which a node belongs, or a user served by a node.

Optionally, the transceiver module may include a receiving module and a sending module. The sending module is configured to implement a sending function of the apparatus according to the fourth aspect, and the receiving module is configured to implement a receiving function of the apparatus according to the fourth aspect.

Optionally, the apparatus according to the fourth aspect may further include a storage module, and the storage module stores a program or instructions. When the processing module executes the program or the instructions, the apparatus may be enabled to perform the method according to the first aspect.

It should be noted that the apparatus according to the fourth aspect may be a terminal device or a network device, or may be a chip (system) or another component or component that may be disposed in a terminal device or a network device, or may be an apparatus that includes a terminal device or a network device. This is not limited in this application.

In addition, for a technical effect of the apparatus according to the fourth aspect, refer to a technical effect of the method according to the first aspect. Details are not described herein again.

According to a fifth aspect, a data processing apparatus is provided. The apparatus is applied to a first node. The first node has an adjacent relationship with a second node, and the first node and the second node are configured to execute a same type of task. The apparatus includes: a transceiver module and a processing module. The transceiver module is configured to obtain a first neural network parameter set. The processing module is configured to determine a first neural network based on a combination of first neural network parameter sets, and then determine a processing result of first data through the first neural network. A quantity of first neural network parameter sets in the combination is positively correlated to a quantity of second nodes.

Optionally, the transceiver module may include a receiving module and a sending module. The sending module is configured to implement a sending function of the apparatus according to the fifth aspect, and the receiving module is configured to implement a receiving function of the apparatus according to the fifth aspect.

Optionally, the apparatus according to the fifth aspect may further include a storage module, and the storage module stores a program or instructions. When the processing module executes the program or the instructions, the apparatus may be enabled to perform the method according to the second aspect.

It should be noted that the apparatus according to the fifth aspect may be a terminal device or a network device, or may be a chip (system) or another component or component that may be disposed in a terminal device or a network device, or may be an apparatus that includes a terminal device or a network device. This is not limited in this application.

In addition, for a technical effect of the apparatus according to the fifth aspect, refer to a technical effect of the method according to the second aspect. Details are not described herein again.

According to a sixth aspect, a data processing apparatus is provided. The apparatus is applied to a first device. The apparatus includes: a transceiver module and a processing module. The processing module is configured to determine a first neural network parameter set. The transceiver module is configured to send the first neural network parameter set. The first neural network is determined based on a combination of first neural network parameter sets. A quantity of first neural network parameter sets in the combination is positively correlated to a quantity of second nodes. The second node has an adjacent relationship with a first node, and the second node and the first node are configured to execute a same type of task.

In a possible design solution, after the transceiver module sends the first neural network parameter set, the transceiver module is further configured to obtain a second neural network parameter set. The second neural network parameter set may be determined based on a processing result of first data and the first neural network.

Optionally, after the transceiver module obtains the second neural network parameter set, the processing module is further configured to determine a fourth neural network parameter set based on the second neural network parameter set and a third neural network parameter set. The third neural network parameter set may be determined by the second node. The fourth neural network parameter set may be used to update the first neural network.

Optionally, the transceiver module may include a receiving module and a sending module. The sending module is configured to implement a sending function of the apparatus according to the sixth aspect, and the receiving module is configured to implement a receiving function of the apparatus according to the sixth aspect.

Optionally, the apparatus according to the sixth aspect may further include a storage module, and the storage module stores a program or instructions. When the processing module executes the program or the instructions, the apparatus may be enabled to perform the method according to the third aspect.

It should be noted that the apparatus according to the sixth aspect may be a terminal device or a network device, or may be a chip (system) or another component or component that may be disposed in a terminal device or a network device, or may be an apparatus that includes a terminal device or a network device. This is not limited in this application.

In addition, for a technical effect of the apparatus according to the sixth aspect, refer to a technical effect of the method according to the third aspect. Details are not described herein again.

According to a seventh aspect, a data processing apparatus is provided. The apparatus includes: a processor, where the processor is coupled to a memory, and the processor is configured to execute a computer program stored in the memory, to cause the apparatus to perform the method according to any possible implementation of the first aspect to the third aspect.

In a possible design solution, the apparatus according to the seventh aspect may further include a transceiver. The transceiver may be a transceiver circuit or an interface circuit. The transceiver may be used in communication between the apparatus according to the seventh aspect and another apparatus.

In this application, the apparatus according to the seventh aspect may be a terminal device or a network device in the first aspect, the second aspect, or the third aspect, or a chip (system) or another component or component that may be disposed in a terminal device or a network device, or an apparatus that includes a terminal device or a network device.

In addition, for a technical effect of the apparatus according to the seventh aspect, refer to a technical effect of the method according to any implementation of the first aspect to the third aspect. Details are not described herein again.

According to an eighth aspect, a data processing apparatus is provided. The apparatus includes: a processor and a memory, where the memory is configured to store a computer program; and when the processor executes the computer program, the apparatus is enabled to perform the method according to any implementation of the first aspect to the third aspect.

In a possible design solution, the apparatus according to the eighth aspect may further include a transceiver. The transceiver may be a transceiver circuit or an interface circuit. The transceiver may be used in communication between the apparatus according to the eighth aspect and another apparatus.

In this application, the apparatus according to the eighth aspect may be a terminal device or a network device in the first aspect, the second aspect, or the third aspect, or a chip (system) or another component or component that may be disposed in a terminal device or a network device, or an apparatus that includes a terminal device or a network device.

In addition, for a technical effect of the apparatus according to the eighth aspect, refer to a technical effect of the method according to any implementation of the first aspect to the third aspect. Details are not described herein again.

According to a ninth aspect, a data processing apparatus is provided. The apparatus includes: a processor and an interface circuit. The interface circuit is configured to receive code instructions and transmit the code instructions to the processor; and the processor is configured to run the code instructions to perform the method according to any implementation of the first aspect to the third aspect.

Optionally, the apparatus according to the ninth aspect may further include: a receiver and a transmitter. The receiver is configured to implement a receiving function of the apparatus, and the transmitter is configured to implement a sending function of the apparatus. Optionally, the transmitter and receiver may also be integrated into one device, such as a transceiver. The transceiver is configured to implement the sending function and the receiving function of the apparatus.

Optionally, the apparatus according to the ninth aspect may further include a memory, and the memory stores a program or instructions. When the processor according to the ninth aspect executes the program or the instructions, the apparatus may perform the method according to any implementation of the first aspect to the third aspect.

In this application, the apparatus according to the ninth aspect may be a terminal device or a network device in the first aspect, the second aspect, or the third aspect, or a chip (system) or another component or component that may be disposed in a terminal device or a network device, or an apparatus that includes a terminal device or a network device.

In addition, for a technical effect of the apparatus according to the ninth aspect, refer to a technical effect of the method according to any implementation of the first aspect to the third aspect. Details are not described herein again.

According to a tenth aspect, a data processing apparatus is provided. The apparatus includes a processor and a transceiver. The transceiver may be a transceiver circuit or an interface circuit. The transceiver is configured to exchange information between the apparatus and another apparatus. The processor executes program instructions, to perform the method according to any implementation of the first aspect to the third aspect.

Optionally, the apparatus according to the tenth aspect may further include a memory, and the memory stores a program or instructions. When the processor according to the tenth aspect executes the program or the instructions, the apparatus may be enabled to perform the method according to any implementation of the first aspect to the third aspect.

In this application, the apparatus according to the tenth aspect may be a terminal device or a network device in the first aspect, the second aspect, or the third aspect, or a chip (system) or another component or component that may be disposed in a terminal device or a network device, or an apparatus that includes a terminal device or a network device.

In addition, for a technical effect of the apparatus according to the tenth aspect, refer to a technical effect of the method according to any implementation of the first aspect to the third aspect. Details are not described herein again.

According to an eleventh aspect, a communication system is provided. The communication system includes one or more terminal devices and one or more network devices. The terminal device or the network device is configured to perform the method according to any implementation of the first aspect to the third aspect.

According to a twelfth aspect, a computer-readable storage medium is provided, including: a computer program or instructions; and when the computer program or instructions runs/run on a computer, the computer is enabled to perform the method according to any possible implementation of the first aspect to the third aspect.

According to a thirteenth aspect, a computer program product is provided, including a computer program or instructions. When the computer program or the instructions runs/run on a computer, the computer is enabled to perform the method according to any possible implementation of the first aspect to the third aspect.

**BRIEF DESCRIPTION OF DRAWINGS**

FIG. 1 is a schematic diagram 1 of an architecture of a communication system according to an embodiment of this application;
FIG. 2 is a schematic flowchart 1 of a data processing method according to an embodiment of this application;
FIG. 3 is a schematic diagram 1 of an architecture of a neural network according to an embodiment of this application;
FIG. 4 is a schematic diagram 2 of an architecture of a communication system according to an embodiment of this application;
FIG. 5 is a schematic diagram 2 of an architecture of a neural network according to an embodiment of this application;
FIG. 6 is a schematic diagram of a frame structure of a data processing method according to an embodiment of this application;
FIG. 7 is a schematic flowchart 2 of a data processing method according to an embodiment of this application;
FIG. 8 is a schematic flowchart 3 of a data processing method according to an embodiment of this application;
FIG. 9 is a schematic diagram 1 of a structure of a data processing apparatus according to an embodiment of this application; and
FIG. 10 is a schematic diagram 2 of a structure of a data processing apparatus according to an embodiment of this application.

**DESCRIPTION OF EMBODIMENTS**

First, technical terms in embodiments of this application are described.

Permutation invariance

The permutation invariance refers to that: When an input sequence of input parameters changes, an output sequence of output results changes accordingly, but the output results do not change.
For example, for an equation $Y = f(X)$ having the permutation invariance, if the input parameter is $X = [x_2, x_1, ... , x_K]$, an output result of the equation $Y = f(X)$ may be $Y = [y_1, y_2, ..., y_K]$. K is an integer greater than 1, $y_1$ is an output result of $x_1$, $y_2$ is an output result of $x_2$, and the rest can be deduced by analogy. $y_K$ is an output result of $x_K$. If an input sequence of the input parameters changes to $X = [x_2, x_1, ..., x_K]$, for the output result of the equation $Y = f(X)$, only the output sequence changes accordingly. For example, the output sequence may be $Y = [y_2, y_1, ... , y_K]$, but the output result does not change. For example, if $y_1$ is still an output result of $x_1$, $y_2$ is still the output result of $x_2$, and the rest can be deduced by analogy. $y_K$ is still the output result of $x_K$.
The following describes technical solutions of this application with reference to the accompanying drawings.
The technical solutions in embodiments of this application may be applied to various communication systems, including but not limited to: a wireless fidelity (wireless fidelity, Wi-Fi) system, a vehicle to everything (vehicle to everything, V2X) communication system, a device-to-device communication system (device-to-device, D2D), an internet of vehicles communication system, a narrow band-internet of things system (narrow band-internet of things, NB-IoT), a 4th generation (4th generation, 4G) mobile communication system, such as a long term evolution (long term evolution, LTE) system, and a 5th generation (5th generation, 5G) mobile communication system, such as a new radio (new radio, NR) system, and a future communication system, such as a 6th generation (6th generation, 6G) mobile communication system.
All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.
In addition, in embodiments of this application, the terms, such as "example" or "for example", are used to represent giving an example, an illustration, or a description. Any embodiment or design scheme described with "example" in this application should not be explained as being more preferred or having more advantages than another embodiment or design scheme. Exactly, use of the terms, such as "example" is intended to present a concept in a specific manner.
In embodiments of this application, sometimes "of (of)", "corresponding (corresponding, relevant)", and "corresponding (corresponding)" may be mixed. It should be noted that when differences are not emphasized, the meaning to be expressed is the same.
In embodiments of this application, sometimes a subscript in, for example, $W_1$ may be written in an incorrect form such as W1. Expressed meanings are consistent when differences are not emphasized.
A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

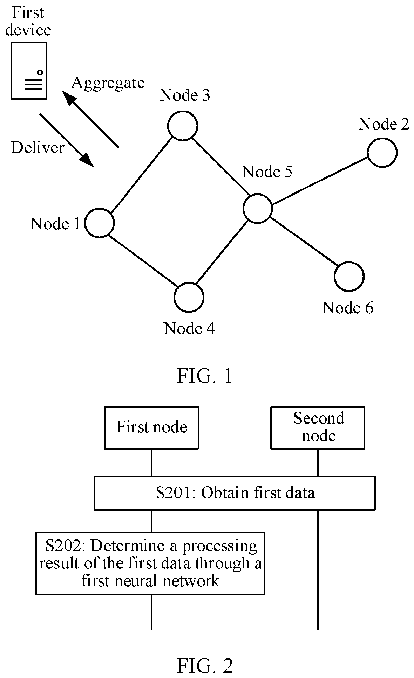

For ease of understanding embodiments of this application, a communication system shown in FIG. 1 is first used as an example to describe in detail a communication system to which embodiments of this application are applicable. For example, FIG. 1 is a schematic diagram of an architecture of a communication system to which a data processing method according to an embodiment of this application is applicable.

As shown in FIG. 1, the communication system includes a plurality of nodes (nodes). The plurality of nodes may form a device cluster. Each node may be a terminal device or a network device.

The terminal device is a terminal that accesses the communication system and has a transceiver function, or a chip or a chip system that may be disposed in the terminal. The terminal device may also be referred to as a user apparatus, an access terminal, a subscriber unit (subscriber unit), a subscriber station, a mobile console, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wearable device, a wireless modem (modem), a handheld device (handset), a laptop computer (laptop computer), a machine type communication (machine type communication, MTC) device, a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. The terminal device in this application may alternatively be a in-vehicle module, a vehicle-mounted module, a vehicle-mounted component, a vehicle-mounted chip, or a vehicle-mounted unit that is built in a vehicle as one or more components or units. The vehicle may implement the data processing method in this application through the vehicle-mounted module, the vehicle-mounted module, the vehicle-mounted component, the vehicle-mounted chip, or the vehicle-mounted unit that is built in the vehicle.

The network device is a device that is located on a network side of the communication system, and has a transceiver function, or a chip or a chip system that may be disposed in the device. The network device includes but is not limited to: an access point (access point, AP) and a base station (base station, BS) in a wireless fidelity (wireless fidelity, Wi-Fi) system. The access point may be a home gateway, a router, a server, a switch, a bridge, or the like. The base station may be a macro base station, a micro base station (also referred to as a small station), a relay station, an evolved NodeB (evolved NodeB, eNB), a radio network controller (radio network controller, RNC), a NodeB (NodeB, NB), a home NodeB (for example, a home evolved NodeB, or a home NodeB, HNB), a wireless relay node, a wireless backhaul node, and a transmission point (a transmission and reception point, TRP or a transmission point, TP), or the like, or may be 5G, for example, a gNB in a new radio (new radio, NR) system, or a transmission point (TRP or TP), or one or one group (including a plurality of antenna panels) of a base station in a 5G system, or may be a network node forming a gNB or a transmission point, for example, an active antenna unit (active antenna unit, AAU), a baseband unit (baseband unit, BBU), a remote radio unit (remote radio unit, RRU), a distributed unit (distributed unit, DU), an RSU having a base station function, or the like. The BBU and the RRU may be placed in different places. For example, the RRU may be placed in an area with heavy traffic, and the BBU may be placed in a central equipment room. For another example, the BBU and the RRU may also be placed in a same equipment room. For another example, the BBU and the RRU may also be different components in one rack.

Further, FIG. 1 is a schematic diagram of an architecture of a communication system. A connection line in FIG. 1 may represent a communication connection relationship between nodes in the communication system. As shown in FIG. 1, in a plurality of nodes in the communication system, the foregoing neural network having the permutation invariance may be deployed for each node, so that the plurality of nodes may cooperate to execute a same type of task (hereinafter referred to as a first type of task) through respective neural networks. For example, in the six nodes shown in FIG. 1, a node 1 to a node 5 may jointly provide a service for one terminal device, or a node 1 to a node 5 may cooperate to complete respective power control. In this way, it may be considered that the node 1 to the node 5 belong to a same device cluster. However, because a node 6 cannot provide a service for the terminal device, or cannot cooperate with the node 1 to the node 5 to complete power control on the node 6, the node 6 does not belong to the device cluster.

The neural network parameter of each node may be delivered by a first device. The first device may be a device other than the plurality of nodes in the communication system, or may be one or more nodes in the plurality of nodes.

A network scale of a neural network of each node may be determined based on a node that has an adjacent relationship with the node, for example, based on a quantity of neighboring nodes. The quantity of neighboring nodes of each node is positively correlated to the network scale of the neural network of the node. For example, in FIG. 1, if there are two neighboring nodes (a node 3 and a node 4) of the node 1, and one neighboring node (the node 5) of the node 2, the node 1 may exchange data with two neighboring nodes during cooperative execution of a first-type task. The node 2 exchanges data with only one neighboring node. In this case, data exchange amount of the node 1 may be greater than data exchange amount of the node 2, so that data processing amount of the node 1 is greater than data processing amount of the node 2. Because the data processing amount of the node 1 is greater than the data processing amount of the node 2, a network scale of a neural network of the node 1 should be greater than a network scale of a neural network of the node 2, to ensure that the node 1 may process a large amount of data.

For ease of understanding, in the following method embodiment, in this application, an example in which a first device, a first node, and a second node are in the communication system, and the first device, the first node, and the second node are different devices is used, to deliver the neural network parameter to the first device. In addition, an implementation principle of the plurality of nodes performing the same type of task through cooperation of the neural network is introduced in detail.

It should be noted that the solutions in embodiments of this application may be further applied to another communication system, and a corresponding name may alternatively be replaced with a name of a corresponding function in the another communication system.

It should be understood that FIG. 1 is merely a simplified schematic diagram of an example for ease of understanding. The communication system may further include another network device and/or another terminal device, which is not shown in FIG. 1.

The following describes in detail the data processing method provided in embodiments of this application with reference to FIG. 2 to FIG. 8.

For example, FIG. 2 is a schematic flowchart 1 of a data processing method according to an embodiment of this application. The data processing method is applicable to communication between any two nodes in the device cluster shown in FIG. 1, for example, communication between a first node and a second node.

As shown in FIG. 2, the data processing method includes the following steps.

S201: A first node obtains first data.

The first data may include: data of the first node and/or data of the second node.

The first node and the second node may be configured to execute a first-type task, and the first node has an adjacent relationship with the second node. For example, the second node may be a neighboring node of the first node. The second node may be determined by one or more of the following: an area in which a node is located, a type of a node, a network to which a node belongs, or a user served by a node. Optionally, the second node may also be determined based on a signal noise ratio (signal noise ratio, SNR) of a radio link, a channel capacity (capacity), a node calculation capability, a load status, a synchronization capability, and the like. This is not limited. For ease of understanding, an example in which the second node is determined based on an area in which a node is located, a type of a node, a network to which a node belongs, or a user served by a node is used below for description.

Scenario A: The second node is determined based on the area in which the node is located.

A location relationship of the area in which the node is located may represent a connection relationship of the node in the network. If areas in which two nodes are located are adjacent and may directly communicate with each other, it represents that the two nodes are directly connected. In this way, one node may be a next-hop node of the other node. For another example, if there is another area between areas in which two nodes are located, and mutual communication between the two nodes needs to pass through the another node, it represents that the two nodes are indirectly connected through the another node. In this way, one node may be a next n-hop node of the other node, and n is an integer greater than 1. In this case, the location relationship of the area in which the node is located may represent a hop count relationship between the nodes. In this way, two nodes whose hop count between the nodes is within a preset hop count may be considered as having an adjacent relationship. The preset hop count may be set based on an actual requirement, for example, set to one hop, two hops, or three hops. This is not limited. Therefore, that the first node determines the second node based on the area in which the node is located may be: determining, based on the hop count relationship between the nodes, a node whose hop count between the node and the first node is within the preset hop count, namely, the second node. For example, the first node may determine, from a device cluster based on a task type of each node, a node configured to execute the first-type task, and then determine, based on the hop count relationship between the nodes, the second node from the nodes configured to execute the first-type task. Descriptions are provided in detail below.

Specifically, the first node may determine a task type of each node in the device cluster through a central method or a distributed method, to determine the node configured to execute the first-type task.

The central method refers to that: A central control device that learns the task type of each node may broadcast indication information to the device cluster. For example, the central control device may broadcast the indication information to the device cluster over a broadcast channel such as a physical broadcast channel (physical broadcast channel, PBCH), and/or a control channel such as a physical downlink control channel (physical downlink control channel, PDCCH). The central control device may be a node, a core network element, user equipment (user equipment, UE), or the like in the device cluster. This is not limited. The indication information may indicate the task type of each node, and may be carried in a system information block (system information block, SIB), radio resource control (radio resource control, RRC) signaling, and downlink control information (Downlink control information, DCI). In this way, the first node may determine, from the device cluster based on the task type indicated by the indication information of the central control node, the node configured to execute the first-type task. For ease of understanding, the following describes in detail through an example with reference to FIG. 1.

For example, the indication information broadcast by the central control node may indicate: a node 1 {a task 1, a task 2}, a node 2 {the task 1, the task 2, a task 3}, a node 3 {the task 2, the task 3}, a node 4 {the task 2, a task 4}, a node 5 {the task 1, the task 2}, and a node 6 {the task 3, the task 4}. If the first-type task is the task 2, the first node such as the node 1 may determine that the node 2 to the node 5 are nodes configured to execute the first-type task.

Optionally, the indication information broadcast by the central control node may further indicate: the task 1 {the node 1, the node 2, the node 5}, the task 2 {the node 2, the node 3, the node 4, the node 5}, the task 3 {the node 2, the node 3, the node 6}, and the task 4 {the node 4, the node 6}. In this way, it may also be determined that the node 2 to the node 5 are nodes configured to execute the first-type task.

It should be understood that if the central control device is a node in the device cluster and is a same device as the first node, the first node may directly determine the node configured to execute the first-type task.

The distributed method refers to that: Each node in the device cluster may broadcast the indication information of the node to the device cluster. For example, each node may broadcast the indication information of the node to the device cluster over a device-to-device (device-to-device, D2D) communication link, such as a physical sidelink control channel (physical sidelink control channel, PSCCH), a physical sidelink shared channel (physical sidelink share channel, PSSCH), or the like in sidelink (sidelink) communication. The indication information may indicate the task type of the node, and may be carried in sidelink control information (sidelink control information, SCI). In this way, the first node may determine, from the device cluster based on the task type indicated by the indication information of each node in the device cluster, the node configured to execute the first-type task. For ease of understanding, the following continues to describe the foregoing examples with reference to FIG. 1.

For example, the indication information broadcast by the node 1 may indicate: the node 1 {the task 1, the task 2}, and indication information broadcast by the node 2 indicates: the node 2 {the task 1, the task 2, the task 3}, and indication information broadcast by the node 3 indicates: the node 3 {the task 2, the task 3}, and indication information broadcast by the node 4 indicates: the node 4 {the task 2, the task 4}, and indication information broadcast by the node 5 indicates: the node 5 {the task 1, the task 2}, and indication information broadcast by the node 6 indicates: the node 6 {the task 3, the task 4}. If the first-type task is the task 2, the first node such as the node 1 may also determine that the node 2 to the node 5 are nodes configured to execute the first-type task.

Further, after determining the node configured to execute the first-type task, the first node may determine, based on the connection relationship, the second node from the nodes configured to execute the first-type task. For ease of understanding, the following continues to describe the foregoing examples with reference to FIG. 1.

For example, if the preset hop count is 1, the first node such as the node 1 may determine, from the node 2 to the node 5, that a hop count between the node 1 and the node 3 and a hop count between the node 1 and the node 4 are equal to the preset hop count based on the connection relationship shown in FIG. 1. Therefore, it is determined that the node 3 and the node 4 are the second nodes. If the preset hop count is 2, the node 1 may determine that the node 3 to the node 5 are the second nodes. If the preset hop count is 3, the node 1 may determine that the node 2 to the node 5 are the second nodes.

It should be understood that the foregoing manner of determining the second node is merely an example manner, and is not used as a limitation. For example, the first node may also first determine, based on the hop count relationship, a node that meets the hop count relationship from the device cluster, and then determine, based on the type of the first-type task, the second node from the node that meets the hop count relationship.

Scenario B: The second node is determined based on a type of the node.

The type of the node may be a device type. If device types of two nodes are the same, for example, both the two nodes are base stations, the two nodes may be considered as having an adjacency relationship. Conversely, if device types of two nodes are different, for example, one node is a base station, and the other node is a security gateway, the two nodes may be considered not having an adjacent relationship. In this way, the first node may determine the second node based on a device type of the first node. For example, the first node may determine, from a device cluster based on a task type of each node, a node configured to execute the first-type task, and then determine, based on the device type of the first node, the second node from the nodes configured to execute the first-type task. Descriptions are provided in detail below.

Specifically, the first node may alternatively determine, from the device cluster in the central method or the distributed method, the node configured to execute the first-type task, and determine the second node from the nodes configured to execute the first-type task.

In one aspect, different from the central method described in the foregoing scenario A, in the scenario B, the indication information broadcast by the central control device may not only indicate the task type of each node, but also indicate a device type of each node. In this way, the first node may determine, from the device cluster based on the task type indicated by the indication information of the central control node, the node configured to execute the first-type task, and determine, based on the device type indicated by the indication information, the second node from the nodes configured to execute the first-type task. For ease of understanding, the following continues to describe the foregoing examples with reference to FIG. 1.

For example, the indication information broadcast by the central control node may indicate: A device type of the node 1 is a type 1, a device type of the node 2 is a type 2, a device type of the node 3 is the type 1, a device type of the node 4 is the type 1, and a device type of the node 5 is the type 2. In this way, the first node such as the node 1 may determine, from the node 2 to the node 5, that the device type of the node 3 and the device type of the node 4 are the same as the device type of the node 1, to determine the node 3 and the node 4 as the second nodes.

Optionally, the indication information broadcast by the central control node may further indicate: the type 1 {the node 1, the node 3, the node 4} and the type 2 {the node 2, the node 5}, so that the node 3 and the node 4 may also be determined as the second nodes.

In another aspect, different from the distributed method described in the foregoing scenario A, in the scenario B, the indication information broadcast by each node may not only indicate the task type of the node, but also indicate the device type of the node. In this way, the first node may determine, from the device cluster based on the task type indicated by the indication information of each node in the device cluster, the node configured to execute the first-type task, and determine, based on the device type indicated by the indication information, the second node from the nodes configured to execute the first-type task. For ease of understanding, the following continues to describe the foregoing examples with reference to FIG. 1.

For example, if the indication information broadcast by the node 1 indicates that: The device type of the node 1 is the type 1, and the indication information broadcast by the node 2 indicates that: The device type of the node 2 is the type 2, and the indication information broadcast by the node 3 indicates that: The device type of the node 3 is the type 1, and the indication information broadcast by the node 4 indicates that: The device type of the node 4 is the type 1, and the indication information broadcast by the node 5 indicates that: If the device type of the node 5 is the type 2, the first node such as the node 1 may also determine that the node 3 and the node 4 are the second nodes.

It should be understood that the foregoing manner of determining the second node is merely an example manner, and is not used as a limitation. For example, the first node may also first determine nodes of a same type from the device cluster based on the device type of the first node, and then determine the second node from the nodes of the same type based on the type of the first-type task.

Scenario C: The second node is determined based on a network to which the node belongs.

The network to which the node belongs may be a physical network to which the node belongs, for example, an access network, a core network, or a logical network, for example, a network slice. The network slice is used as an example. If two nodes belong to a same network slice, the two nodes may be considered as having an adjacent relationship. Conversely, if the two nodes belong to two different network slices, the two nodes may be considered not having an adjacent relationship. In this way, the first node may determine the second node based on the network slice to which the first node belongs. For example, the first node may determine, from a device cluster based on a type of each node, a node configured to execute the first-type task, and then determine, based on the network slice to which the first node belongs, the second node from the nodes configured to execute the first-type task. Descriptions are provided in detail below.

Specifically, the first node may alternatively determine, from the device cluster in the central method or the distributed method, the node configured to execute the first-type task, and determine the second node from the nodes configured to execute the first-type task.

In one aspect, different from the central method described in the foregoing scenario A, in the scenario C, the indication information broadcast by the central control device may not only indicate the task type of each node, but also indicate the network slice to which each node belongs. In this way, the first node may determine, from the device cluster based on the task type indicated by the indication information of the central control node, the node configured to execute the first-type task, and determine, based on the network slice indicated by the indication information, the second node from the node configured to execute the first-type task. For ease of understanding, the following continues to describe the foregoing examples with reference to FIG. 1.

For example, the indication information broadcast by the central control node indicates that: The node 1 belongs to a network slice 1, the node 2 belongs to a network slice 2, the node 3 belongs to the network slice 1, the node 4 belongs to the network slice 1, and the node 5 belongs to the network slice 1. In this way, the first node such as the node 1 may determine, from the node 2 to the node 5, a same network slice to which the node 3 to the node 5 and the node 1 belong, to determine that the node 3 to the node 5 are the second nodes.

Optionally, the indication information broadcast by the central control node may further indicate: The network slice 1 {the node 1, the node 3, the node 4} and the network slice 2 {the node 2, the node 5}, so that the node 3 and the node 4 may also be determined as the second nodes.

In another aspect, different from the distributed method described in the foregoing scenario A, in the scenario C, the indication information broadcast by each node may not only indicate the task type of the node, but also indicate the network slice to which the node belongs. In this way, the first node may determine, from the device cluster based on the task type indicated by the indication information of each node in the device cluster, the node configured to execute the first-type task, and determine, based on the network slice indicated by the indication information, the second node from the nodes configured to execute the first-type task. For ease of understanding, the following continues to describe the foregoing examples with reference to FIG. 1.

For example, the indication information broadcast by the node 1 indicates that: The node 1 belongs to the network slice 1, and the indication information broadcast by the node 2 indicates that: The node 2 belongs to the network slice 2, and the indication information broadcast by the node 3 indicates that: The node 3 belongs to the network slice 1, and the indication information broadcast by the node 4 indicates that: The node 4 belongs to the network slice 1, and the indication information broadcast by the node 5 indicates that: The node 5 belongs to the network slice 1. In this way, the first node, for example, the node 1, may also determine that the node 3 to the node 5 are the second nodes.

It should be understood that the foregoing manner of determining the second node is merely an example manner, and is not used as a limitation. For example, the first node may also first determine, from the device cluster based on the network slice to which the first node belongs, the node that belongs to the same network slice, and then determine, based on the type of the first-type task, the second node from the node that belongs to the same network slice.

Scenario D: The second node is determined based on the user served by the node.

A service provided by the node for the user may be an access service, a network service, or the like. If two nodes provide a service for a same user, the two nodes are considered as having an adjacent relationship; and conversely, if the two nodes separately provide services for different users, the two nodes are considered as not having the adjacent relationship. The same user may be a same user, users of a same type, users in a same multicast group, users located in a same area, and the like. For example, a TRP node is used as an example. If two TRP nodes provide a data transmission service for the same user, the two TRPs may be considered as having an adjacent relationship; and conversely, if two TRPs separately provide data transmission services for two different users, the two TRPs are considered as not having the adjacent relationship. Descriptions are provided in detail below.

Specifically, in the scenario D, the user may broadcast indication information to a plurality of nodes, to indicate that the user is served by which nodes. In this way, the first node may determine, based on a serving node indicated by the indication information broadcast by the user, the second node from the nodes configured to execute the first-type task. Optionally, in the scenario D, the node that executes the first-type task may be determined by using the central method or the distributed method. For specific implementation, refer to the related description in any one of the scenario A to the scenario C. Details are not described herein again. For ease of understanding, the following continues to describe the foregoing examples with reference to FIG. 1.

For example, the indication information broadcast by the user may indicate that: the node 1 serves a user 1, the node 2 serves the user 1, the node 3 serves the user 1, the node 4 serves the user 1, and the node 5 serves the user 1. In this way, the first node such as the node 1 may determine, from the node 2 to the node 5, that the node 2 to the node 5 and the node 1 serve the same user, to determine that the node 2 to the node 5 are the second nodes.

Optionally, the indication information broadcast by the user may further indicate that: The user 1 receives services of {the node 2, the node 3, the node 4, the node 5}. In this way, it may also be determined that the node 2 to the node 5 are the second nodes.

It should be understood that the foregoing manner of determining the second node is merely an example manner, and is not used as a limitation. For example, the first node may also first determine, from the device cluster based on the indication information sent by the user, the node serving the same user, and then determine, from the node serving the same user based on the type of the first-type task, the second node.

Further, it may be learned from the foregoing description that the first data may include: data of the first node and/or data of the second node. For the data of the first node, the first node may obtain the data locally, and for the data of the second node, the first node may obtain the data from the second node. Then, the first node may continue to perform S302.

S202: The first node determines a processing result of first data through a first neural network.

The first neural network may be determined by the first node based on a combination of first neural network parameter sets. A quantity of first neural network parameter sets in the combination is positively correlated to a quantity of second nodes. The first neural network parameter set may be a parameter set preconfigured by the first node, or may also be a parameter set obtained from the first device.

The first neural network parameter set may include: a first parameter subset and/or a second parameter subset. The first parameter subset and the second parameter subset are two different parameter subsets.

Optionally, if the first neural network includes N hidden layers, the first parameter subset and the second parameter subset may be N groups. In this way, an $i^{th}$ group of first parameter subsets and second parameter subsets may be used to determine a neural network structure of the $i^{th}$ hidden layer.

Specifically, a relationship between an output vector $\mathbf{h}^i$ corresponding to the $i^{th}$ hidden layer and an output vector $\mathbf{h}^{i-1}$ corresponding to an $(i-1)^{th}$ hidden layer may be represented through the following Formula (1):

$$\mathbf{h}^i = \sigma\big(\mathbf{w}^{i-1,i}\mathbf{h}^{i-1} + \mathbf{b}^i\big); (1)$$

$\mathbf{w}^{i-1,i}$ may be a matrix, and may be determined based on a part of neural network parameter sets corresponding to the $i^{th}$ hidden layer, for example, determined based on a weight parameter set of a neuron. $\mathbf{b}^i$ may be a matrix, and may be determined based on another part of a neural network parameter set corresponding to the $i^{th}$ hidden layer, for example, determined based on a bias parameter set of the neuron. $\sigma$ may be an activation function, for example, may be a rectified linear unit (rectified linear unit, ReLU), a hyperbolic tangent function (hyperbolic tangent function), or the like. N is a positive integer, and i is an integer less than or equal to N.

In this way, if $\mathbf{W}^{i-1,i} = [\mathbf{w}^{i-1,i} \ \mathbf{b}^i]$ is set and all output vectors $\mathbf{H}^i = [\mathbf{h}^i \ \mathbf{1}]^T$ corresponding to the $i^{th}$ hidden layer are set, a relationship between all the output vectors $\mathbf{H}^i$ corresponding to the $i^{th}$ hidden layer and all output vectors $\mathbf{H}^{i-1}$ corresponding to the $(i-1)^{th}$ hidden layer may be represented through the following Formula (2):

$$\mathbf{H}^i = \sigma\big(\mathbf{W}^{i-1,i}\mathbf{H}^{i-1}\big); (2)$$

$\mathbf{W}^{i-1,i}$ may be a matrix, and may be determined based on the $i^{th}$ group of first parameter subsets and second parameter subsets, to indicate the neural network structure of the $i^{th}$ hidden layer.

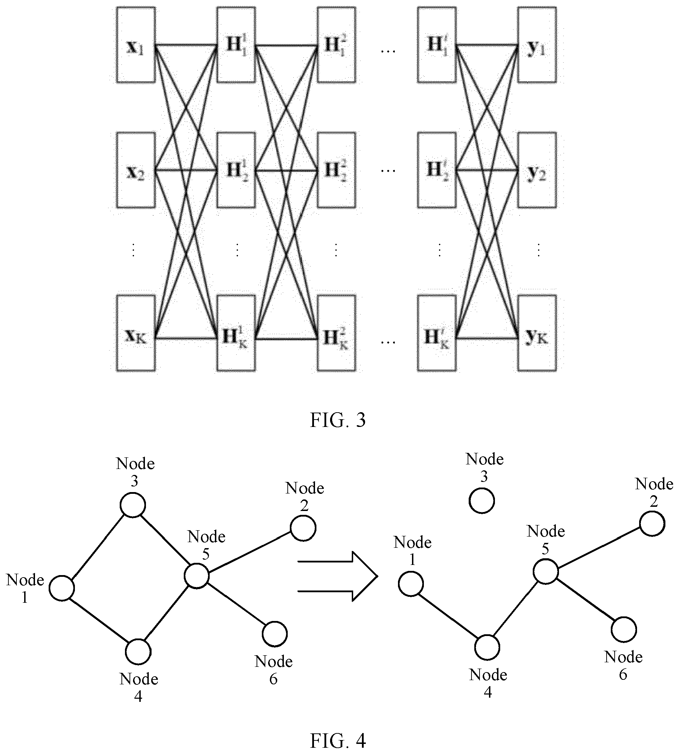

FIG. 3 is a schematic diagram of a neural network structure of a first neural network. As shown in FIG. 3, a first column of parameters $[\mathbf{x}_1, \mathbf{x}_2, ..., \mathbf{x}_K]$ are input parameters, an $i^{th}$ column of parameters $\left[\mathbf{H}_1^i, \mathbf{H}_2^i, ..., \mathbf{H}_K^i\right]$ are output vectors, a last column of parameters $[\mathbf{y}_1, \mathbf{y}_2, ..., \mathbf{y}_K]$ are output results, a matrix $\mathbf{W}^{i-1,i}$ corresponding to the $i^{th}$ hidden layer is located between two adjacent columns of parameters, and a connection line between the two adjacent columns of parameters may represent an operation corresponding to Formula (2). For example, between the first column of parameters and the second column of parameters, to be specific, between the input parameters $[\mathbf{x}_1, \mathbf{x}_2, ..., \mathbf{x}_K]$ and the output vectors $\left[\mathbf{H}_1^1, \mathbf{H}_2^1, ..., \mathbf{H}_K^1\right]$, there is a matrix $\mathbf{W}^{0,1}$ corresponding to a first hidden layer, and between the second column of parameters and a third column of parameters, to be specific, between the output vectors $\left[\mathbf{H}_1^1, \mathbf{H}_2^1, ..., \mathbf{H}_K^1\right]$ and the output vectors $\left[\mathbf{H}_1^2, \mathbf{H}_2^2, ..., \mathbf{H}_K^2\right]$, there is a matrix $\mathbf{W}^{1,2}$ corresponding to a second hidden layer. The rest can be deduced by analogy. Between an $(i-1)^{th}$ column of parameters and an $i^{th}$ column of parameters, to be specific, between the output vectors $\left[\mathbf{H}_1^{i-1}, \mathbf{H}_2^{i-1}, ..., \mathbf{H}_K^{i-1}\right]$ and the output vectors $\left[\mathbf{H}_1^i, \mathbf{H}_2^i, ..., \mathbf{H}_K^i\right]$, there is a matrix $\mathbf{W}^{i-1,i}$ corresponding to the $i^{th}$ hidden layer, and between the $i^{th}$ column of parameters and an $(i+1)^{th}$ column of parameters, to be specific, between the output vectors $\left[\mathbf{H}_1^i, \mathbf{H}_2^i, ..., \mathbf{H}_K^i\right]$ and the output results $[\mathbf{y}_1, \mathbf{y}_2, ..., \mathbf{y}_K]$, there is a matrix $\mathbf{W}^{i,i+1}$ corresponding to the $i^{th}$ hidden layer. In this way, it may be learned that an upper corner of the matrix $\mathbf{W}^{i-1,i}$ may represent a location of the matrix $\mathbf{W}^{i-1,i}$ in the first neural network. In addition, each column of parameters may also be understood as: The output vectors $\left[\mathbf{H}_1^1, \mathbf{H}_2^1, ..., \mathbf{H}_K^1\right]$ are determined by processing the input parameters $[\mathbf{x}_1, \mathbf{x}_2, ..., \mathbf{x}_K]$ by the matrix $\mathbf{W}^{0,1}$, the output vectors $\left[\mathbf{H}_1^2, \mathbf{H}_2^2, ..., \mathbf{H}_K^2\right]$ are determined by processing the output vectors $\left[\mathbf{H}_1^2, \mathbf{H}_2^2, ..., \mathbf{H}_K^2\right]$ by the matrix $\mathbf{W}^{0,1}$, and the rest can be deduced by analogy. The output vectors $\left[\mathbf{H}_1^i, \mathbf{H}_2^i, ..., \mathbf{H}_K^i\right]$ are determined by processing the output vectors $\left[\mathbf{H}_1^{i-1}, \mathbf{H}_2^{i-1}, ..., \mathbf{H}_K^{i-1}\right]$ by the matrix $\mathbf{W}^{i-1,i}$, and the output results $[\mathbf{y}_1, \mathbf{y}_2, ..., \mathbf{y}_K]$ are determined by processing the output vectors $\left[\mathbf{H}_1^i, \mathbf{H}_2^i, ..., \mathbf{H}_K^i\right]$ by the matrix $\mathbf{W}^{i,i+1}$.

It should be noted that for the matrix $\mathbf{W}^{0,1}$, a first row of the matrix $\mathbf{W}^{0,1}$ is used to process data of a first node, for example, process the input parameters $\mathbf{X}_1$, and a second row to a $K^{th}$ row of the matrix $\mathbf{W}^{0,1}$ are used to process data of a second node, for example, process the input parameters $[x_2, ..., x_K]$. This may ensure that data of all nodes may be correctly processed.

The matrix $\mathbf{W}^{i-1,i}$ may include a matrix $\mathbf{S}^{i-1,i}$ and a matrix $\mathbf{O}^{i-1,i}$, and the matrix $\mathbf{S}^{i-1,i}$ and the matrix $\mathbf{O}^{i-1,i}$ are two different matrices. In this way, an $i^{th}$ group of first parameter subsets may be used to determine a matrix $\mathbf{S}^{i-1,i}$. For example, the matrix $\mathbf{S}^{i-1,i}$ is determined based on the $i^{th}$ group of first parameter subsets and a parameter structure of each parameter in the $i^{th}$ group of first parameter subsets, and an $i^{th}$ group of second parameter subsets may be used to determine the matrix $\mathbf{O}^{i-1,i}$. For example, the matrix $\mathbf{O}^{i-1,i}$ is determined based on the $i^{th}$ group of second parameter subsets and a parameter structure of each parameter in the $i^{th}$ group of second parameter subsets. A parameter structure of each parameter in the $i^{th}$ group of first parameter subsets may be used to determine a location of each parameter in the $i^{th}$ group of first parameter subsets in the matrix $\mathbf{S}^{i-1,i}$. The parameter structure of each parameter in the $i^{th}$ group of second parameter subsets may be used to determine a location of each parameter in the $i^{th}$ group of second parameter subsets in the matrix $\mathbf{O}^{i-1,i}$. In addition, the parameter structure may be preconfigured by the first node, or may be obtained from a first device. For example, the first device may pack and send the first neural network parameter set and the parameter structure, or send the matrix $\mathbf{S}^{i-1,i}$ and the matrix $\mathbf{O}^{i-1,i}$.

It should be understood that because the first neural network is determined based on a combination of first neural network parameter sets, a quantity of parameters of the first neural network should be greater than a quantity of parameters in the first neural network parameter set. In this way, compared with sending all neural network parameters of the neural network, sending the first neural network parameter set may effectively reduce a data communication volume. This improves communication efficiency.

Further, the first node may determine the architecture of the first neural network as shown in FIG. 3, and determine the neural network structure of the $i^{th}$ hidden layer based on a combination of the matrix $\mathbf{S}^{i-1,i}$ and the matrix $\mathbf{O}^{i-1,i}$, as shown in the following Formula (3) for determining the matrix $\mathbf{W}^{i-1,i}$.

$$\mathbf{W}^{i-1,i} = \begin{bmatrix} \mathbf{S}^{i-1,i} & \mathbf{O}^{i-1,i} & \dots & \mathbf{O}^{i-1,i} \\ \mathbf{O}^{i-1,i} & \mathbf{S}^{i-1,i} & \dots & \mathbf{O}^{i-1,i} \\ \vdots & \vdots & \ddots & \vdots \\ \mathbf{O}^{i-1,i} & \mathbf{O}^{i-1,i} & \dots & \mathbf{S}^{i-1,i} \end{bmatrix} . (3)$$

In this way, the first neural network may be a neural network of a symmetric network structure, and has the foregoing permutation invariance.

It may be learnt that a neural network with a conventional structure, such as a neural network not having the permutation invariance, needs to adjust an input sequence of data to output a correct processing result. Different from this, the first neural network having the permutation invariance may also output the correct processing result without adjusting the input sequence of the data. In other words, compared with the neural network with the conventional structure, the first neural network may omit the step of adjusting the input sequence, to simplify a processing procedure. This may improve data processing efficiency. For example, in a resource scheduling scenario, if the input parameters $\mathbf{x}_K$ are state information of a $K^{th}$ device, such as channel state information, buffer state information, and historical scheduling information, the output results $\mathbf{y}_K$ may be a scheduling priority of the $K^{th}$ device. If an input sequence of the state information is changed, for example, the input sequence is changed from $\mathbf{X} = [\mathbf{x}_1, \mathbf{x}_2, \dots, \mathbf{x}_K]$ to $\mathbf{X} = [\mathbf{x}_2, \mathbf{x}_1, \dots, \mathbf{x}_K]$, a sequence of outputting a scheduling priority of the first neural network is correspondingly changed, for example, an output sequence is changed from $\mathbf{Y} = [\mathbf{y}_1, \mathbf{y}_2, \dots, \mathbf{y}_K]$ to $\mathbf{Y} = [\mathbf{y}_2, \mathbf{y}_1, \dots, \mathbf{y}_K]$, and a value of a scheduling priority of each device does not change due to a change of the input sequence. For another example, in a power control scenario, if the input parameters $\mathbf{x}_K$ are the state information of the $K^{th}$ device, such as a channel matrix, a signal interference matrix, or a power control policy in a previous round, output results $\mathbf{y}_K$ may be a power control policy in a current round of the $K^{th}$ device. If the input sequence of the state information is changed, for example, the input sequence is changed from $\mathbf{X} = [\mathbf{x}_1, \mathbf{x}_2, \dots, \mathbf{x}_K]$ to $\mathbf{X} = [\mathbf{x}_2, \mathbf{x}_1, \dots, \mathbf{x}_K]$, a sequence of an output power control policy of the first neural network is correspondingly changed, for example, the output sequence is correspondingly changed from $\mathbf{Y} = [\mathbf{y}_1, \mathbf{y}_2, \dots, \mathbf{y}_K]$ to $\mathbf{Y} = [\mathbf{y}_2, \mathbf{y}_1, \dots, \mathbf{y}_K]$, and a power control policy of each device in a current round does not change due to the change of the input sequence.

For ease of understanding, the following specifically describes how the first node determines the matrix $\mathbf{W}^{i-1,i}$ based on the combination of the matrix $\mathbf{S}^{i-1,i}$ and the matrix $\mathbf{O}^{i-1,i}$.

Because a quantity of second nodes is positively correlated to a quantity of first neural network parameter sets in the foregoing combination, the quantity of second nodes is also positively correlated to a quantity of first parameter subsets and/or a quantity of second parameter subsets in the foregoing combination. In addition, because the first parameter subset may determine the matrix $\mathbf{S}^{i-1,i}$, and the second parameter subset may determine the matrix $\mathbf{O}^{i-1,i}$, the quantity of second nodes may also be positively correlated to a quantity of matrices $\mathbf{S}^{i-1,i}$ and a quantity of matrices $\mathbf{O}^{i-1,i}$ in the foregoing combination. Further, the matrix $\mathbf{S}^{i-1,i}$ and the matrix $\mathbf{O}^{i-1,i}$ may be combined into a matrix $\mathbf{W}^{i-1,i}$. On a basis that the quantity of second nodes is positively correlated to the quantity of matrices $\mathbf{S}^{i-1,i}$ and the quantity of matrices $\mathbf{O}^{i-1,i}$ in the foregoing combination, the quantity of second nodes may also be positively correlated to a size of the matrix

$\mathbf{W}^{i-1,i}$. In this way, a quantity of rows of the matrix $\mathbf{W}^{i-1,i}$ may be positively correlated to the quantity of second nodes. For example, the quantity of rows of the matrix $\mathbf{W}^{i-1,i}$ may be a sum of the quantity of first nodes and the quantity of second nodes, and a quantity of columns of the matrix $\mathbf{W}^{i-1,i}$ may be positively correlated to the quantity of second nodes. For example, the quantity of columns of the matrix $\mathbf{W}^{i-1,i}$ may also be the sum of the quantity of first nodes and the quantity of second nodes.

Based on the foregoing principle, the first node may determine the size of the matrix $\mathbf{W}^{i-1,i}$ based on a positive correlation relationship between the quantity of second nodes and the size of the matrix $\mathbf{W}^{i-1,i}$. In this way, the first node may determine the quantity $S_i$ of matrices $\mathbf{S}^{i-1,i}$ and the quantity $O_i$ of matrices $\mathbf{O}^{i-1,i}$ in the matrix $\mathbf{W}^{i-1,i}$ based on the size of the matrix $\mathbf{W}^{i-1,i}$. In this way, the first node may determine the neural network structure of the $i^{th}$ hidden layer based on a combination of the $S_i$ matrices $\mathbf{S}^{i-1,i}$ and/or the $O_i$ matrices $\mathbf{O}^{i-1,i}$, to determine the first neural network, and determine the first neural network based on the combination of first neural network parameter sets. For ease of understanding, the following continues to describe the foregoing examples with reference to FIG. 1.

For example, in the scenario A or the scenario B, the first node may be the node 1, and the second node may include the node 3 and the node 4, to be specific, the quantity of second nodes is 2. In this case, the node 1 may determine the size of the matrix $\mathbf{W}^{i-1,i}$ to be 3*3 based on the positive correlation relationship between the quantity of second nodes and the size of the matrix $\mathbf{W}^{i-1,i}$. The matrix $\mathbf{W}^{i-1,i}$ whose size is 3*3 may be a combination of three matrices $\mathbf{S}^{i-1,i}$ and six matrices $\mathbf{O}^{i-1,i}$. In this way, the node 1 may determine the neural network structure of the $i^{th}$ hidden layer as shown in the following Formula (5):

$$\mathbf{W}^{i-1,i} = \begin{bmatrix} \mathbf{S}^{i-1,i} & \mathbf{O}^{i-1,i} & \mathbf{O}^{i-1,i} \\ \mathbf{O}^{i-1,i} & \mathbf{S}^{i-1,i} & \mathbf{O}^{i-1,i} \\ \mathbf{O}^{i-1,i} & \mathbf{O}^{i-1,i} & \mathbf{S}^{i-1,i} \end{bmatrix} . (5)$$

In the scenario C, because the first node may be the node 1, and the second node may include the node 3 to the node 5, to be specific, the quantity of second nodes is 3. In this case, the node 1 may determine the size of the matrix $\mathbf{W}^{i-1,i}$ to be 4*4 based on the positive correlation relationship between the quantity of second nodes and the size of the matrix $\mathbf{W}^{i-1,i}$. The matrix $\mathbf{W}^{i-1,i}$ whose size is 4*4 may be a combination of four matrices $\mathbf{S}^{i-1,i}$ and 12 matrices $\mathbf{O}^{i-1,i}$. In this way, the node 1 may determine the neural network structure of the $i^{th}$ hidden layer as shown in the following Formula (6):

$$\mathbf{W}^{i-1,i} = \begin{bmatrix} \mathbf{S}^{i-1,i} & \mathbf{O}^{i-1,i} & \mathbf{O}^{i-1,i} & \mathbf{O}^{i-1,i} \\ \mathbf{O}^{i-1,i} & \mathbf{S}^{i-1,i} & \mathbf{O}^{i-1,i} & \mathbf{O}^{i-1,i} \\ \mathbf{O}^{i-1,i} & \mathbf{O}^{i-1,i} & \mathbf{S}^{i-1,i} & \mathbf{O}^{i-1,i} \\ \mathbf{O}^{i-1,i} & \mathbf{O}^{i-1,i} & \mathbf{O}^{i-1,i} & \mathbf{S}^{i-1,i} \end{bmatrix} . (6)$$

In the scenario D, because the first node may be the node 1, and the second node includes the node 2 to the node 5, to be specific, the quantity of second nodes is 4. In this case, the node 1 may determine the size of the matrix $\mathbf{W}^{i-1,i}$ to be 5*5 based on the positive correlation relationship between the quantity of second nodes and the size of the matrix $\mathbf{W}^{i-1,i}$. The matrix $\mathbf{W}^{i-1,i}$ whose size is 5*5 may be a combination of five matrices $\mathbf{S}^{i-1,i}$ and 20 matrices $\mathbf{O}^{i-1,i}$. In this way, the node 1 may determine the neural network structure of the $i^{th}$ hidden layer as shown in the following Formula (7):

$$\mathbf{W}^{i-1,i} = \begin{bmatrix} \mathbf{S}^{i-1,i} & \mathbf{O}^{i-1,i} & \mathbf{O}^{i-1,i} & \mathbf{O}^{i-1,i} & \mathbf{O}^{i-1,i} \\ \mathbf{O}^{i-1,i} & \mathbf{S}^{i-1,i} & \mathbf{O}^{i-1,i} & \mathbf{O}^{i-1,i} & \mathbf{O}^{i-1,i} \\ \mathbf{O}^{i-1,i} & \mathbf{O}^{i-1,i} & \mathbf{S}^{i-1,i} & \mathbf{O}^{i-1,i} & \mathbf{O}^{i-1,i} \\ \mathbf{O}^{i-1,i} & \mathbf{O}^{i-1,i} & \mathbf{O}^{i-1,i} & \mathbf{S}^{i-1,i} & \mathbf{O}^{i-1,i} \\ \mathbf{O}^{i-1,i} & \mathbf{O}^{i-1,i} & \mathbf{O}^{i-1,i} & \mathbf{O}^{i-1,i} & \mathbf{S}^{i-1,i} \end{bmatrix} . (7)$$

It should be understood that the foregoing manner of determining the first neural network is merely an example manner, and is not used as a limitation. For example, if the first neural network parameter set includes more than two parameter subsets, the first node may further determine the first neural network based on a combination of more than two parameter subsets.

It should be further understood that because the $i^{th}$ hidden layer may be determined based on the combination of first neural network parameter sets, for example, may be determined based on a combination of one or more parameter

subsets, in $M_i$ parameter subsets included in the $i^{th}$ hidden layer, there may be m parameter subsets that are the same. m is an integer less than or equal to M and greater than 1. For example, in the $i^{th}$ hidden layer shown in Formula (5), not only three first parameter subsets are the same, but also nine second parameter subsets are the same. For another example, in the $i^{th}$ hidden layer shown in Formula (6), not only four first parameter subsets are the same, but also 12 second parameter subsets are the same. For another example, in the $i^{th}$ hidden layer shown in Formula (7), not only five first parameter subsets are the same, but also 20 second parameter subsets are the same. In other words, the first neural network may be determined based on a combination of same parameter subsets. In this way, the calculation amount may be effectively reduced, to quickly determine the first neural network.

Further, it may be learned from the foregoing description of the neural network structure of the first neural network that a first hidden layer may process the first data, to output a processing result of the first hidden layer. Then, a second hidden layer may process the processing result of the first hidden layer, to output a processing result of the second hidden layer. The rest can be deduced by analogy. Finally, the $i^{th}$ hidden layer may process a processing result of the $(i-1)^{th}$ hidden layer, to output a processing result of the $i^{th}$ hidden layer, namely, a processing result of the first data. The processing result of the first data may include: a processing result of data of the first node and/or a processing result of data of the second node.

Optionally, in a first implementation scenario of the embodiment shown in FIG. 2, if the quantity of second nodes changes from the first quantity to the second quantity, in the combination of first neural network parameter sets, the quantity of first parameter subsets may be correspondingly adjusted from the third quantity to the fourth quantity. As shown in the foregoing matrix $\mathbf{W}^{i-1,i}$, the quantity of matrices $\mathbf{S}^{i-1,i}$ may be correspondingly adjusted from the third quantity to the fourth quantity, and the quantity of second parameter subsets may be correspondingly adjusted from the fifth quantity to the sixth quantity. For example, in the foregoing matrix $\mathbf{W}^{i-1,i}$, the quantity of matrices $\mathbf{O}^{i-1,i}$ may be correspondingly adjusted from the fifth quantity to the sixth quantity. The quantity of second nodes changes from the first quantity to the second quantity. In this way, the network scale of the first neural network may be dynamically adjusted based on a change of the quantity of second nodes, so that the first neural network may be dynamically maintained in an optimal network scale. This avoids network scale redundancy, and further improves data processing efficiency.

In a possible implementation, the first node may determine, in the central method or the distributed manner, whether the quantity of second nodes changes. For example, each node in the central control device or the device cluster may periodically broadcast the indication information. In this way, the first node may determine a quantity of current periodicities of the second node based on the indication information, and determine, based on the quantity of current periodicities and a quantity of previous periodicities, whether the quantity of second nodes changes. If the first node determines that the quantity of second nodes changes, for example, the first node determines that the quantity of second nodes changes from the first quantity to the second quantity, the first node may correspondingly adjust the quantity of matrices $\mathbf{S}^{i-1,i}$ in the foregoing matrix $\mathbf{W}^{i-1,i}$ from the third quantity to the fourth quantity based on the second quantity, and in the foregoing matrix $\mathbf{W}^{i-1,i}$, the quantity of matrices $\mathbf{O}^{i-1,i}$ is correspondingly adjusted from the fifth quantity to the sixth quantity. In this way, the first node may dynamically adjust a network scale of the first neural network based on a combination of the fourth quantity of matrices $\mathbf{S}^{i-1,i}$ and the sixth quantity of matrices $\mathbf{O}^{i-1,i}$. For specific implementation of determining, by the first node, the quantity of current periodicities of the second node based on the indication information, refer to the related description in the scenario A to the scenario D. For specific implementation of a combination the fourth quantity of matrices $\mathbf{S}^{i-1,i}$ and the sixth quantity of matrices $\mathbf{O}^{i-1,i}$, refer to the related description in "S302". Details are not described herein again. For ease of understanding, the following continues to describe the foregoing examples with reference to FIG. 1.

For example, in the scenario A or the scenario B, the first node may be the node 1, and the second node may include the node 3 and the node 4. If the node 1 determines, based on the indication information, for example, based on the indication information broadcast by the central control device, that the node 6 is the newly added second node, the second node may further include the node 3, the node 4, and the node 6. In this way, the node 1 may determine that the quantity of second nodes changes from 2 to 3, and determine, based on a positive correlation relationship between the quantity of second nodes and the size of the matrix $\mathbf{W}^{i-1,i}$, that the size of the matrix $\mathbf{W}^{i-1,i}$ is changed from 3*3 to 4*4. Therefore, it is further determined that the quantity $S_i$ of matrices $\mathbf{S}^{i-1,i}$ is changed from 3 to 4, and the quantity $O_i$ of matrices $\mathbf{O}^{i-1,i}$ is changed from 6 to 12. In this way, the node 1 may adjust the neural network structure of the $i^{th}$ hidden layer from the structure shown in Formula (5) to the structure shown in Formula (6) based on a combination of the four matrices $\mathbf{S}^{i-1,i}$ and the 12 matrices $\mathbf{O}^{i-1,i}$, to expand the network scale of the first neural network.

In the scenario C, the first node may be the node 1, and the second node includes the node 3 to the node 5. If the node 1 determines, based on the indication information, for example, based on the indication information broadcast by the node, that the node 6 is the newly added second node, the second node may further include the node 3 to the node 6. In this way, the node 1 may determine that the quantity of second nodes changes from 3 to 4, and determine, based on a positive correlation relationship between the quantity of second nodes and the size of the matrix $\mathbf{W}^{i-1,i}$, that the size of the matrix $\mathbf{W}^{i-1,i}$ is changed from 4*4 to 5*5. Therefore, it is further determined that the quantity $S_i$ of matrices $\mathbf{S}^{i-1,i}$ is changed from 4 to 5, and the quantity $O_i$ of matrices $\mathbf{O}^{i-1,i}$ is changed from 12 to 20. In this way, the node 1 may adjust the neural network structure of the $i^{th}$ hidden layer from the structure shown in Formula (6) to the structure shown in Formula (7) based on a combination of the five matrices $\mathbf{S}^{i-1,i}$ and the 20 matrices $\mathbf{O}^{i-1,i}$, to expand the network scale of the first neural network.

In another possible implementation, the first node may determine, through reachability detection, whether the quantity of second nodes changes. For example, the first node may periodically detect reachability of each second node, to determine whether there is an unreachable node in a current periodicity. If the first node determines that there is an unreachable node in the current periodicity, the first node may further determine a change of the quantity of second nodes, for example, determine to change from the first quantity to the second quantity. The second quantity is the first quantity minus a quantity of unreachable nodes. In this way, the first node may correspondingly adjust the quantity of matrices $\mathbf{S}^{i-1,i}$ in the foregoing matrix $\mathbf{W}^{i-1,i}$ from the third quantity to the fourth quantity based on the second quantity, and in the foregoing matrix $\mathbf{W}^{i-1,i}$, the quantity of matrices $\mathbf{O}^{i-1,i}$ is correspondingly adjusted from the fifth quantity to the sixth quantity. In this way, the first node may dynamically adjust the network scale of the first neural network based on a combination of the fourth quantity of matrices $\mathbf{S}^{i-1,i}$ and the sixth quantity of matrices $\mathbf{O}^{i-1,i}$. For specific implementation of the combination the fourth quantity of matrices $\mathbf{S}^{i-1,i}$ and the sixth quantity of matrices $\mathbf{O}^{i-1,i}$, refer to the related description in "S302". Details are not described herein again.

For ease of understanding, the following continues to describe the foregoing examples with reference to FIG. 1 and FIG. 4. FIG. 4 shows a change of a connection relationship between nodes in a communication system.

For example, in the scenario D, a first node may be a node 1, and a second node may include a node 2 to a node 5. As shown in FIG. 4, if the node 1 determines, through reachability detection, that a node 3 is unreachable, the second node may further include the node 2, a node 4, and the node 5. In this way, the node 1 may determine that the quantity of second nodes changes from 4 to 3, and determine, based on a positive correlation relationship between the quantity of second nodes and the size of the matrix $\mathbf{W}^{i-1,i}$, that the size of the matrix $\mathbf{W}^{i-1,i}$ is changed from 5*5 to 4*4. Therefore, it is further determined that the quantity $S_i$ of matrices $\mathbf{S}^{i-1,i}$ is changed from 5 to 4, and the quantity $O_i$ of matrices $\mathbf{O}^{i-1,i}$ is changed from 20 to 12. In this way, the node 1 may adjust the neural network structure of the $i^{th}$ hidden layer from the structure shown in the foregoing Formula (7) to the structure shown in the foregoing Formula (6) based on a combination of the four matrices $\mathbf{S}^{i-1,i}$ and the 12 matrices $\mathbf{O}^{i-1,i}$, to reduce the network scale of the first neural network.

Optionally, with reference to the first implementation scenario, in a second implementation scenario of the embodiment shown in FIG. 2, after S302, the method shown in FIG. 1 may further include the following steps. Step 1: A first node determines a second neural network parameter set.

The second neural network parameter set may be determined by the first node based on the processing result and the first neural network, for example, the first neural network is updated based on the processing result, to obtain the second neural network parameter set, and implement training and updating of the first neural network. The processing result is a processing result of the first data determined through the first neural network. The second neural network parameter set may include: a third parameter subset and/or a fourth parameter subset. A manner of training the first neural network may include: supervised learning and reinforcement learning, which are respectively described below.

a. Supervised learning

The supervised learning may also be referred to as supervised training or teacher learning. The supervised learning refers to that: The first neural network is updated by using a loss (loss) between a processing result of the first data and a data label of the first data, so that a loss between the processing result that is subsequently output by the first neural network and the data label may become smaller, and finally convergence is implemented. The processing result is an estimated result of the first neural network, and the data label is an actual result. For example, if the first data is state information of a device, such as channel state information, buffer state information, or historical scheduling information, and the processing result is an estimated scheduling priority, the data label may be an actual scheduling priority of the device. For another example, if the first data is profile information of a user, such as a service type, a service volume, or a service lifetime, and the processing result is an estimated user type, the data label may be an actual user type of the user.

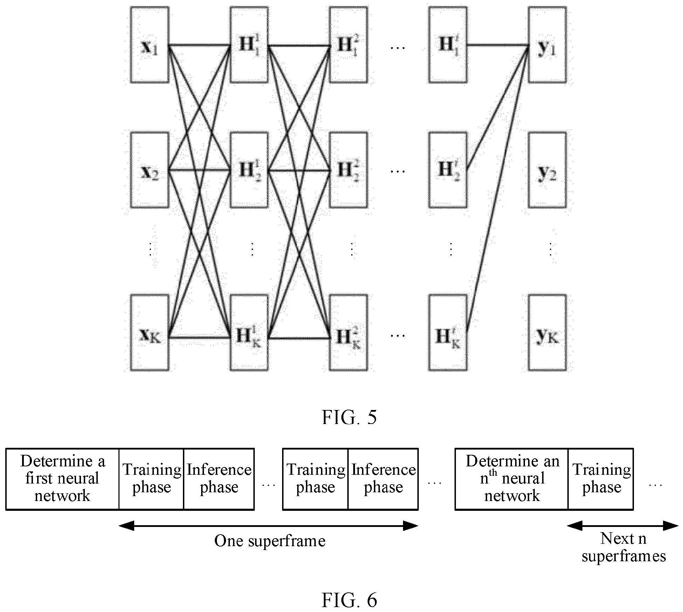

Specifically, in a possible implementation, the first node may train the first neural network by using the data of the first node. In this way, the first node and the second node may exchange respective data without exchanging data labels corresponding to respective data. This reduces data communication traffic between the first node and the second node, and further improves communication efficiency. For ease of understanding, the following describes with reference to FIG. 5.

FIG. 5 shows an overall structure of a first neural network in a first scenario. The first scenario is a scenario in which the first neural network is trained by using data of a first node, data of a second node, and a data label of the first node. As shown in FIG. 5, an $i^{th}$ hidden layer of the first neural network may output a processing result yi of the data of the first node. If the data label of the first node is zi, the first node may determine that the loss is loss = $D(\mathbf{y}_1, \mathbf{z}_1)$. D() may be a loss function, such as a cross entropy function or a mean square error function. Further, the first node may perform derivation on a parameter in a neural network parameter set of the first neural network by using the loss function, to obtain a corresponding gradient, and update the first neural network through reverse transfer of the gradient, for example, update a first neural network parameter set to a second neural network parameter set. In this way, the first node may update a neural network structure of the $i^{th}$ hidden layer based on a combination of second neural network parameter sets, to train the first neural network. An updated neural network structure of the $i^{th}$ hidden layer may be shown in the following Formula (8):

$$\mathbf{W}^{i-1,i} = \begin{bmatrix} \mathbf{S}^{i-1,i'} & \mathbf{O}^{i-1,i'} & ... & \mathbf{O}^{i-1,i'} \\ \mathbf{O}^{i-1,i'} & \mathbf{S}^{i-1,i'} & ... & \mathbf{O}^{i-1,i'} \\ \vdots & \vdots & \ddots & \vdots \\ \mathbf{O}^{i-1,i'} & \mathbf{O}^{i-1,i'} & ... & \mathbf{S}^{i-1,i'} \end{bmatrix}; (8)$$

$\mathbf{S}^{i-1,i'}$ may be determined based on a third parameter subset in the second neural network parameter set and the foregoing parameter structure, and $\mathbf{O}^{i-1,i'}$ may be determined based on a fourth parameter subset in the second neural network parameter set and the foregoing parameter structure.

In another possible implementation, the first node may train the first neural network by using the data of the first node and a label corresponding to the data, and the data of the second node and a label corresponding to the data. In this way, the first node and the second node may not only exchange data, but also exchange data labels corresponding to respective data, so that the first node may train the first neural network by using more data, so that the first neural network may converge more quickly. This improves a training effect of the first neural network and shortens training duration. For ease of understanding, the following describes with reference to FIG. 3.

FIG. 3 shows an overall structure of a first neural network in a second scenario. The second scenario is a scenario in which the first neural network is trained by using the data label of the first node and the data label of the second node. As shown in FIG. 3, the $i^{th}$ hidden layer of the first neural network may output processing results of respective data of the first node and the second node, for example, a processing result $\mathbf{y}_1$ to a processing result $y_K$. There are K processing results in total. Correspondingly, there may also be K data labels corresponding to the data of the first node and the data of the second node. A data label corresponding to the $k^{th}$ processing result $\mathbf{y}_k$ is $\mathbf{z}_k$, and k is a positive integer less than or equal to K. In this way, the first node may determine that the loss is

$$\text{loss} = \sum_{k=1}^{K} D(\mathbf{y}_k, \mathbf{z}_k)$$. Further, the first node may perform derivation on a neural network parameter set of the first neural network by using the loss function, to obtain a corresponding gradient, and update the first neural network through reverse transfer of the gradient, for example, update a first neural network parameter set to a second neural network parameter set. In this way, the first node may also update a neural network structure of the $i^{th}$ hidden layer based on a combination of second neural network parameter sets, to train the first neural network. An updated neural network structure of the $i^{th}$ hidden layer may also be shown in Formula (8).

b. Reinforcement learning

The reinforcement learning may also be referred to as re-encouraging learning, evaluative learning, or reinforcement learning. The reinforcement learning refers to that: In a case that there is no label, the first neural network is updated by using a benefit generated by the processing result, so that the benefit generated by the processing result subsequently output by the first neural network may become greater, and finally convergence is implemented. The benefit may reflect rationality of the processing result. The more reasonable the processing result is, the greater the benefit. For example, if the first data is state information of the device, such as a channel matrix, a signal interference matrix, or a power control policy in a previous round, and the processing result is a power control policy in a current round of the device, after the device executes the power control policy in the current round, the device benefit may be represented by a data throughput and a packet loss rate of the device, for example, is represented by r = THP + $\alpha$ * (1 - PL). THP is the data throughput, PL is the packet loss rate, and $\alpha$ is a constant. It may be learned that if the power control policy in the current round of the device is more reasonable, the data throughput of the device is greater and/or the packet loss rate is lower, and the benefit is greater.

Specifically, in a possible implementation, the first node may generate the benefit by using the processing result of the data of the first node, and train the first neural network. For ease of understanding, the following continues to describe with reference to FIG. 5.

An overall structure of the first neural network in a third scenario may also be shown in FIG. 5. As shown in FIG. 5, an $i^{th}$ hidden layer of the first neural network may output a processing result $y_1$ of the data of the first node. If the benefits of the first node are $r_1$, the first node may perform derivation on a neural network parameter set of the first neural network by using the benefits $r_1$, to obtain a corresponding gradient, and update the first neural network through reverse transfer of the gradient, for example, update a first neural network parameter set to a second neural network parameter set. In this way, the first node may also update a neural network structure of the $i^{th}$ hidden layer based on a combination of second neural network parameter sets, to train the first neural network. An updated neural network structure of the $i^{th}$ hidden layer may also be shown in Formula (8).

In another possible implementation, the first node may generate the benefit by using the processing results of the data of the first node and the data of the second node, and train the first neural network. For ease of understanding, the following continues to describe with reference to FIG. 5.

An overall structure of the first neural network in a third scenario may also be shown in FIG. 5. As shown in FIG. 5, in one aspect, the $i^{th}$ hidden layer of the first neural network may output the processing results of the data of the first node and the data of the second node, for example, the processing result $\mathbf{y}_1$, so that the first node may determine a benefit $r_1$ corresponding to the processing result $\mathbf{y}_1$. In another aspect, the first node may receive a benefit from each second node, for example, a benefit $r_2$ to a benefit $r_k$. There are K-1 benefits in total. For an implementation principle in which each second node determines the benefit of the second node, refer to the related description of determining the benefit $r_1$ by the first node. Details are not described herein again. In this way, the first node obtains K benefits in total.

The $k^{th}$ benefit is $r_k$. In this case, the first node may determine that an overall benefit is $R = \sum_{k=1}^{K} r_k$ , or is R = $\sum_{k=1}^{K} r_k + \beta r_k'$ . $\beta$ may be a constant, and $r_k'$ may be used to adjust balance of the benefit $r_k$, to ensure that the benefit $r_k$ may have a reasonable impact on the overall benefit. For example, if the benefit $r_k$ is $r_k = THP_k + \alpha * (1 - PL_k)$, $r_k'$ may be $r_k' = \frac{\left(\sum_{k=1}^{K} THP_k\right)^2}{\sum_{k=1}^{K} THP_k^2}$ . $THP_k$ is a data throughput of a $k^{th}$ device, $PL_k$ is a packet loss rate of the $k^{th}$ device, and $\alpha$ is a fairness indicator of a communication system. Further, the first node may perform derivation on a neural network parameter set of the first neural network by using the overall benefit, to obtain a corresponding gradient, and update the first neural network through reverse transfer of the gradient, for example, update a first neural network parameter set to a second neural network parameter set. In this way, the first node may also update a neural network structure of the $i^{th}$ hidden layer based on a combination of second neural network parameter sets, to train the first neural network. An updated neural network structure of the $i^{th}$ hidden layer may also be shown in Formula (8).

It should be understood that because training manners of the first scenario to the fourth scenario are different, in Formula (8), values of the matrix $\mathbf{S}^{i-1,i'}$ and the matrix $\mathbf{O}^{i-1,i'}$ in the first scenario to the fourth scenario may also be different. In addition, a benefit sent by each second node to the second node is merely an example, and is not used as a limitation. For example, each second node may also send a processing result of the second node, so that the first node determines the benefit of the second node based on the processing result of each second node.

It should be further understood that the foregoing description is made by using an example in which the first node performs training, and this is not used as a limitation. In practice, a procedure in which the first node uses a neural network may be shown in FIG. 6. It may be learned from FIG. 6 that when a first-type task needs to be executed, the first node may determine a first neural network, and enter a training phase, to repeat the foregoing training process until the first neural network converges. The first node may then enter an inference phase, to execute the first-type task by using the first neural network. Then, as a data type changes, a channel state changes, or the like, precision of the first neural network may gradually decrease, the first node may enter the training phase again, and the rest can be deduced by analogy until the first-type task ends. After the first-type task ends, the first node may release the first neural network, to save resources and improve resource utilization. In other words, retention duration of the first neural network may be retention duration of the first-type task, and the retention duration may also be referred to as a superframe time period. In this way, in the next n superframe time periods, n may be a positive integer. The first node may re-determine a neural network based on an $n^{th}$ type of task, for example, a second-type task, and then the rest can still be deduced by analogy.

Optionally, with reference to the second implementation scenario, in a third implementation scenario of the embodiment shown in FIG. 2, after step 1, the method may further include: Step 2: The first node sends a second neural network parameter set.

The first node may send the second neural network parameter set to the first device. Correspondingly, the first device may receive the second neural network parameter set from the first node. In this way, the first device may perform an aggregation operation of the neural network. For example, the first device may determine a fourth neural network parameter set based on the second neural network parameter set and a third neural network parameter set.

The third neural network parameter set is determined by the second node, and may include a fifth parameter subset and/or a sixth parameter subset. The fourth neural network parameter set may include a seventh parameter subset and/or an eighth parameter subset, and may be used by the first device to update the first neural network parameter set.

It should be understood that for specific implementation of determining the third neural network parameter set by the second node, refer to the related description of determining the second neural network parameter set by the first node in "step 1". Details are not described herein again. The following describes in detail how the first device performs the aggregation operation of the neural network.

Specifically, the first device may perform weighted summation on the second neural network parameter set and the third neural network parameter set based on a respective weight of the first node and the second node, to determine the fourth neural network parameter set. For example, the first device may perform weighted summation on the third parameter subset and the fifth parameter subset based on the respective weight of the first node and the second node, to determine the seventh parameter subset, and perform weighted summation on the fourth parameter subset and the sixth parameter subset, to determine the eighth parameter subset. The respective weight of the first node and the second node may be determined based on a respective data volume of the first node and the second node, and/or may also be determined based on respective data importance of the first node and the second node. This is not limited. For example, if a data volume and/or importance of data used by each node for training a neural network are larger, a weight of the node is correspondingly greater; and conversely, if the data volume and/or importance of the data used by each node for training the neural network are smaller and/or weaker, the weight of the node is correspondingly smaller, to ensure that the neural network parameter set of each node may produce a reasonable effect on aggregation of the neural network parameter.

Then, the first device may send the fourth neural network parameter set. For example, the first device sends the fourth neural network parameter set, so that the first node may obtain the fourth neural network parameter set, and update the first neural network based on the fourth neural network parameter set. For specific implementation of updating the first neural network based on the fourth neural network parameter set, refer to the related description in S302. Details are not described herein again.

It should be understood that because the aggregation operation may integrate training results of all nodes, a training speed of the first neural network may be improved, so that the first neural network may converge more quickly. This shortens training duration and improves training efficiency. In addition, because both a quantity of parameters in the second neural network parameter set and a quantity of parameters in the third neural network parameter set are less than a quantity of parameters in the first neural network, compared with aggregating all parameters of the first neural network, aggregating the second neural network parameter set and the third neural network parameter set may effectively reduce a calculation amount and improve an aggregation speed.

It should be further understood that sending, by the first node, the second neural network parameter set is merely an example, and is not used as a limitation. For example, the first node may also send the matrix $\mathbf{S}^{i-1,i'}$ and the matrix $\mathbf{O}^{i-1,i'}$ to the first device. In addition, sending, by the first device, the fourth neural network parameter set to the first node is merely an example, and is not used as a limitation. For example, the first device may further send the matrix $\mathbf{S}^{i-1,i'''}$ and the matrix $\mathbf{O}^{i-1,i'''}$ to the first node. The matrix $\mathbf{S}^{i-1,i'''}$ may be determined based on the seventh parameter subset and the parameter structure, and the matrix $\mathbf{O}^{i-1,i'''}$ may be determined based on the eighth parameter subset and the parameter structure.

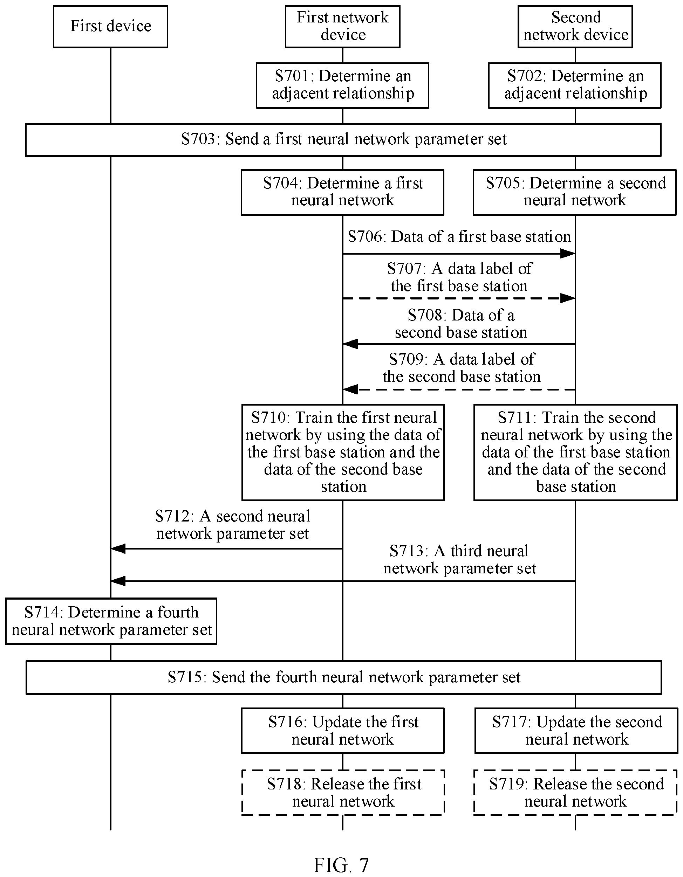

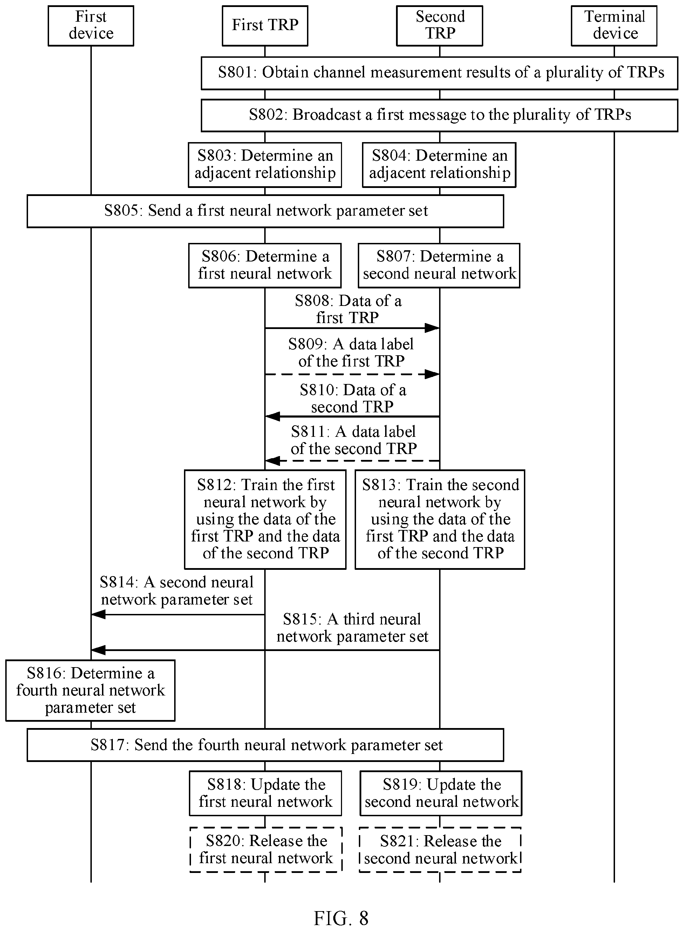

The foregoing describes a principle of the data processing method provided in this application with reference to FIG. 2 to FIG. 6. The following specifically describes application of the method in an actual scenario with reference to FIG. 7 and FIG. 8.

FIG. 7 is a schematic flowchart of a data processing method in a power control scenario. For ease of understanding, the following uses a first network device and a second network device as an example for description. The first network device and the second network device are respectively any two nodes in the plurality of nodes. As shown in FIG. 7, the data processing method may include the following steps.

S701: A first network device determines an adjacent relationship.

The first network device may determine that the first network device has an adjacent relationship with the second network device. For specific implementation of S701, refer to the related description in "S301". Details are not described herein again.

S702: A second network device determines the adjacent relationship.

Similarly, the second network device may also determine that the second network device has an adjacent relationship with the first network device. For specific implementation of S702, still refer to the related description in "S301". Details are not described herein again.

S703: A first device sends a first neural network parameter set, and the first network device and the second network device receive the first neural network parameter set from the first device.

In a possible implementation, the first device may send the first neural network parameter set in a non-directional manner. For example, the first device may periodically broadcast a first broadcast message. The first neural network parameter set may be carried in the first broadcast message. In this way, the first network device and the second network device may receive the first broadcast message, to obtain the first neural network parameter set.

In another possible implementation, the first device may send the first neural network parameter set in a directional manner. For example, after receiving a first request message from the first network device, the first device may send, to the first device, a first response message that carries the first neural network parameter set, so that the first network device receives the first response message and obtains a first parameter subset and a second parameter subset. Similarly, after receiving a second request message from the second network device, the first device may alternatively send, to the second device, a second response message that carries the first neural network parameter set, so that the second network device receives the second response message, to obtain the first neural network parameter set.

The first device may further send a parameter structure of the first neural network parameter set to the first network device and the second network device, or may also send the matrix $\mathbf{S}^{i-1,i}$ and the matrix $\mathbf{O}^{i-1,i}$ to the first network device and the second network device. For specific implementation, refer to the related description in S302. Details are not described herein again. In addition, an execution sequence of S701 to S703 is not limited.

S704: The first network device determines a first neural network.

The first network device may combine the first neural network parameter sets based on a positive correlation relationship between a quantity of second network devices and a quantity of first neural network parameter sets, to determine the first neural network. In addition, for specific implementation of S704, refer to the related description in S302. Details are not described herein again.

S705: The second network device determines a second neural network.

Similarly, the second network device may alternatively combine the first neural network parameter sets based on a positive correlation relationship between the quantity of first network devices and the quantity of first neural network parameter sets, to determine the second neural network.

In addition, for specific implementation of S705, still refer to the related description in S302. Details are not described herein again.

S706: The first network device sends data of the first network device to the second network device, and the second network device receives the data from the first network device.

The data of the first network device may be one or more pieces of the following data of the first network device: a channel matrix, a signal interference matrix, or a power control policy in a previous round. This is not limited.

S707: The first network device sends a data label of the first network device to the second network device, and the second network device receives the data label from the first network device.

The data label of the first network device may be an actual power control policy of the first network device in a current round. S707 is an optional step. For example, if the second network device trains the second neural network in a supervised learning manner, S707 may be performed; otherwise, if the second network device trains the second neural network in a reinforcement learning manner, S707 may not be performed.

S708: The second network device sends data of the second network device to the first network device, and the first network device receives the data from the second network device.

The data of the second network device may be one or more pieces of the following data of the second network device: a channel matrix, a signal interference matrix, or a power control policy in a previous round. This is not limited.

S709: The second network device sends a data label of the second network device to the first network device, and the first network device receives the data label from the second network device.

The data label of the second network device may be an actual power control policy of the second network device in a current round. S709 is also an optional step. For example, if the first network device trains the first neural network in a supervised learning manner, S709 may be performed; otherwise, if the first network device trains the first neural network in a reinforcement learning manner, S709 may not be performed. In addition, an execution sequence of S704 to S709 is not limited.

S710: The first network device trains a first neural network by using the data of the first network device and the data of the second network device.

Specifically, the first network device may train the first neural network in the supervised learning manner or the reinforcement learning manner, to obtain the second neural network parameter set. For specific implementation of S710, refer to the related description in step 2. Details are not described herein again.

S711: The second network device trains a second neural network by using the data of the first network device and the data of the second network device.

Specifically, the second network device may also train the second neural network in the supervised learning manner or the reinforcement learning manner, to obtain a third neural network parameter set. For specific implementation of S711, still refer to the related description in step 2. Details are not described herein again.

S712: The first network device sends a second neural network parameter set to the first device, and the first device receives the second neural network parameter set from the first network device.

S713: The second network device sends a third neural network parameter set to the first device, and the first device receives the third neural network parameter set from the second network device.

The first network device may also send the matrix $S^{i-1,i'}$ and the matrix $O^{i-1,i'}$ to the first device, and the second network device may also send the matrix $S^{i-1,i''}$ and $O^{i-1,i''}$ to the first device. This is not limited. For specific implementation, refer to the related description in step 2. Details are not described herein again. In addition, an execution sequence of S712 and S713 is not limited.

S714: The first device determines a fourth neural network parameter set.

The fourth neural network parameter set may be determined by the first device by aggregating the second neural network parameter set and the third neural network parameter set. For specific implementation, refer to the related description in step 2. Details are not described herein again.

S715: The first device sends a fourth neural network parameter set, and the first network device and the second network device receive the fourth neural network parameter set from the first device.

The first device may further send a structure parameter of the fourth neural network parameter set, or may send the matrix $S^{i-1,i'''}$ and the matrix $O^{i-1,i'''}$. This is not limited. The matrix $S^{i-1,i'''}$ may be determined by an aggregation matrix $S^{i-1,i'}$ and $S^{i-1,i''}$ of the first device, and the matrix $O^{i-1,i'''}$ may be determined by the aggregation matrix $O^{i-1,i'}$ and $O^{i-1,i''}$ of the first device. In addition, for specific implementation of S715, refer to the related description in step 2 and S703. Details are not described herein again.

S716: The first network device updates the first neural network.

The first network device may update the first neural network based on the fourth neural network parameter set. In addition, for specific implementation of S716, refer to the related description in step 2. Details are not described herein again.

S717: The second network device updates the second neural network.

The second network device may update the second neural network based on the fourth neural network parameter set. In addition, for specific implementation of S717, refer to the related description in step 2. Details are not described herein again.

It should be understood that after S716, the first network device may continue to train the first neural network, to be specific, iteratively perform related steps in S706 to S716 until training of the first neural network is completed, to enter an inference phase and perform a power control task. Alternatively, after S716, the first network device may also enter the inference phase. Similarly, after S717, the second network device may also continue to train the second neural network, to be specific, iteratively perform related steps in S707 to S717 until training of the second neural network is completed, to enter the inference phase and perform the power control task. Alternatively, after S717, the second network device may also enter the inference phase.

S718: The first network device releases the first neural network.

If the power control task ends, to be specific, one superframe time period ends, the first network device may release the first neural network. For example, the first network device may delete the neural network parameter set of the first neural network, to avoid resource redundancy of the first network device and improve resource utilization of the first network device.

S719: The second network device releases the second neural network.

If the power control task ends, to be specific, one superframe time period ends, the second network device may also release the second neural network. For example, the second network device may delete the neural network parameter set of the second neural network, to avoid resource redundancy of the second network device and improve resource utilization of the second network device.

In addition, S718 and S719 are optional steps. For example, if another task needs to be executed after the superframe time period ends, the first neural network and the second neural network may be released; otherwise, the first neural network and the second neural network may be retained.

FIG. 8 is a schematic flowchart of a data processing method in a multi-transmission point (multi-transmission/reception point, multi-TRP) scenario. For ease of understanding, the following uses a terminal device, and a first TRP and a second TRP in a plurality of TRPs as an example for description. The first TRP and the second TRP are respectively any two nodes in the plurality of nodes. As shown in FIG. 8, the data processing method may include the following steps.

S801: A terminal device obtains channel measurement results of a plurality of TRPs.

Because the terminal device may be located in signal coverage of the plurality of TRPs, the terminal device may perform channel measurement, to obtain the channel measurement results of the plurality of TRPs. For example, the channel measurement results may be signal strength between the terminal device and each TRP.

S802: The terminal device broadcasts a first message to the plurality of TRPs, and a first TRP and a second TRP receive the first message from the terminal device.

The first message may carry the channel measurement result, for example, may be an SCI message. In this way, both the first TRP and the second TRP may receive the first message, to obtain the channel measurement result.

S803: The first TRP determines an adjacent relationship.

Specifically, the first TRP may determine, based on the channel measurement result, that the first TRP has an adjacent relationship with the second TRP. For example, if the channel measurement result indicates that the signal strength between the first TRP and the second TRP and the terminal device is greater than a signal strength threshold, both the first TRP and the second TRP may provide a data transmission service for the terminal device. In this way, the first TRP may determine that the first TRP has the adjacent relationship with the second TRP. For another example, if the channel measurement result indicates that the signal strength between the first TRP and the terminal device is greater than the signal strength threshold, and indicates that signal strength between a third TRP (not shown in the figure) and the terminal device is less than the signal strength threshold, the third TRP may fail to provide the data transmission service for the user. In this way, the first TRP may determine that the first TRP does not have the adjacent relationship with the third TRP. In addition, the first TRP may also determine, in the foregoing other manners, that the first TRP has the adjacent relationship with the second TRP. For specific implementation, refer to the related description in "S301". Details are not described herein again.

S804: The second TRP determines the adjacent relationship.

Similarly, the second TRP may also determine, based on the channel measurement result, that the second TRP has the adjacent relationship with the first TRP. In addition, for specific implementation of S804, still refer to the related description in "S301". Details are not described herein again.

S805: The first device sends the first neural network parameter set, and the first TRP and the second TRP receive the first neural network parameter set from the first device.

For specific implementation of S805, refer to the related description in S703. Details are not described herein again. In addition, an execution sequence of S801 to S805 is not limited.

S806: The first TRP determines a first neural network.

The first TRP may combine the first neural network parameter sets based on a positive correlation relationship between a quantity of second TRPs and a quantity of first neural network parameter sets, to determine the first neural network. In addition, for specific implementation of S806, refer to the related description in S302. Details are not described herein again.

S807: The second TRP determines a second neural network.

Similarly, the second TRP may alternatively combine the first neural network parameter sets based on a positive correlation relationship between the quantity of first TRPs and the quantity of first neural network parameter sets, to determine the second neural network. In addition, for specific implementation of S807, still refer to the related description in S302. Details are not described herein again.

S808: The first TRP sends data of the first TRP to the second TRP, and the second TRP receives the data from the first TRP.

The data of the first TRP may be one or more pieces of the following data of the first TRP: channel strength, a channel matrix, or a load. This is not limited.

S809: The first TRP sends a data label of the first TRP to the second TRP, and the second TRP receives the data label from the first TRP.

The data label of the first TRP may be whether the first TRP actually provides the data transmission service for the terminal device, for example, may be 0 or 1. 0 represents that the first TRP actually does not provide the data transmission service for the terminal device, and 1 represents that the first TRP actually provides the data transmission service for the terminal device. In addition, S809 is an optional step. For example, if the second TRP trains the second neural network in a supervised learning manner, S809 may be performed; otherwise, if the second TRP trains the second neural network in a reinforcement learning manner, S809 may not be performed.

S810: The second TRP sends data of the second TRP to the first TRP, and the first TRP receives the data from the second TRP.

The data of the second TRP may be one or more pieces of the following data of the second TRP: channel strength, a channel matrix, or a load. This is not limited.

S811: The second TRP sends a data label of the second TRP to the first TRP, and the first TRP receives the data label from the second TRP.

Specifically, the data label of the second TRP may be whether the second TRP actually provides the data transmission service for the terminal device, for example, may be 0 or 1. 0 represents that the second TRP actually does not provide the data transmission service for the terminal device, and 1 represents that the second TRP actually provides the data transmission service for the terminal device. In addition, S811 is also an optional step. For example, if the first TRP trains the first neural network in a supervised learning manner, S811 may be performed; otherwise, if the first TRP trains the first neural network in a reinforcement learning manner, S811 may not be performed. An execution sequence of S806 to S811 is not limited.

S812: The first TRP trains a first neural network by using the data of the first TRP and the data of the second TRP.

Specifically, the first TRP may obtain, based on the first neural network, a processing result the data of the first TRP and the data of the second TRP by the first neural network. For example, the processing result may be a probability that the first TRP provides the data transmission service for the terminal device, and the probability may be between 0 and 1. In this way, the first TRP may train the first neural network in the supervised learning manner or the reinforcement learning manner, to obtain the second neural network parameter set. For example, if supervised learning is used, the first TRP may determine a loss between the probability and whether the first TRP actually provides the data transmission service for the terminal device, to train the first neural network by using the loss. For another example, if reinforcement learning is used, the first TRP may determine, based on the probability, whether to provide the data transmission service for the terminal device. In this way, the first TRP may obtain a parameter such as a data throughput, a packet loss rate, or a delay of the terminal device when the first TRP provides the data transmission service or does not provide the data transmission service, to determine a benefit based on these parameters, and train the first neural network by using the benefit. In addition, for specific implementation of S812, refer to the related description in step 2. Details are not described herein again.

S813: The second TRP trains a second neural network by using the data of the first TRP and the data of the second TRP.

Specifically, the second TRP may obtain, based on the second neural network, a processing result the data of the first TRP and the data of the second TRP by the second neural network. For example, the processing result may be a probability that the second TRP provides the data transmission service for the terminal device. In this way, the second TRP may train the second neural network in the supervised learning manner or the reinforcement learning manner, to obtain a third neural network parameter set. For example, if supervised learning is used, the second TRP may determine a loss between the probability and whether the second TRP actually provides the data transmission service for the terminal device, to train the first neural network by using the loss. For another example, if reinforcement learning is used, the second TRP may determine, based on the probability, whether to provide the data transmission service for the terminal device. In this way, the second TRP may obtain a parameter such as a data throughput, a packet loss rate, or a delay of the terminal device when the second TRP provides the data transmission service or does not provide the data transmission service, to determine a benefit based on these parameters, to train the first neural network by using the benefit. In addition, for specific implementation of S813, refer to the related description in step 2. Details are not described herein again.

S814: The first TRP sends a second neural network parameter set to the first device, and the first device receives the second neural network parameter set from the first TRP.

S815: The second TRP sends a third neural network parameter set to the first device, and the first device receives the third neural network parameter set from the second TRP.

The first TRP may also send the matrix $\mathbf{S}^{i-1,i'}$ and the matrix $\mathbf{O}^{i-1,i'}$ to the first device, and the second TRP may also send the matrix $\mathbf{S}^{i-1,i''}$ and $\mathbf{O}^{i-1,i''}$ to the first device. This is not limited. For specific implementation, refer to the related description in step 2. Details are not described herein again. In addition, an execution sequence of S814 and S815 is not limited.

S816: The first device determines a fourth neural network parameter set.

For specific implementation of S816, refer to the related description in step 2. Details are not described herein again.

S817: The first device sends a fourth neural network parameter set.

For specific implementation of S817, refer to the related description in step 2, S703, and S715. Details are not described herein again.

S818: The first TRP updates the first neural network.

The first TRP may update the first neural network based on the fourth neural network parameter set. In addition, for specific implementation of S818, refer to the related description in step 2. Details are not described herein again.

S819: The second TRP updates the second neural network.

The second TRP may also update the second neural network based on the fourth neural network parameter set. In addition, for specific implementation of S819, refer to the related description in step 2. Details are not described herein again.

It should be understood that after S818, the first TRP may continue to train the first neural network, to be specific, iteratively perform related steps in S808 to S818 until training of the first neural network is completed, to enter an inference phase and perform a multi-TRP task. Alternatively, after S818, the first TRP may also enter the inference phase. Similarly, after S819, the second TRP may also continue to train the second neural network, to be specific, iteratively perform related steps in S809 to S819 until training of the second neural network is completed, to enter the inference phase and perform the multi-TRP task. Alternatively, after S819, the second TRP may also enter the inference phase.

S820: The first TRP releases the first neural network.

If the multi-TRP task ends, to be specific, one superframe time period ends, the first TRP may release the first neural network. For example, the first network device may delete the neural network parameter set of the first neural network, to avoid resource redundancy of the first TRP and improve resource utilization of the first TRP.

S821: The second TRP releases the second neural network.

If the multi-TRP task ends, to be specific, one superframe time period ends, the second TRP may release the second neural network. For example, the second network device may delete the neural network parameter set of the second neural network, to avoid resource redundancy of the second TRP and improve resource utilization of the second TRP.

In addition, S820 and S821 are optional steps. For example, if another task needs to be executed after the superframe time period ends, the first neural network and the second neural network may be released; otherwise, the first neural network and the second neural network may be retained.

It may be learned from the data processing method shown in any one of FIG. 2, FIG. 7, or FIG. 8, because a plurality of nodes may execute the same type of task, and the first node may determine a quantity of first neural network parameter sets based on a quantity of neighboring nodes in the plurality of nodes, for example, a quantity of second nodes, to further determine the first neural network. In this way, a network scale of the first neural network may be positively correlated to the quantity of second nodes, to cooperate with the second node to execute the same type of task. For example, when the quantity of neighboring nodes is less than a quantity of nodes in a device cluster, the first neural network is only a part of a complete neural network, and a network scale of the first neural network is also less than a network scale of the complete neural network. Therefore, calculation complexity and a calculation amount of the neural network may be reduced, and data processing efficiency may be improved.

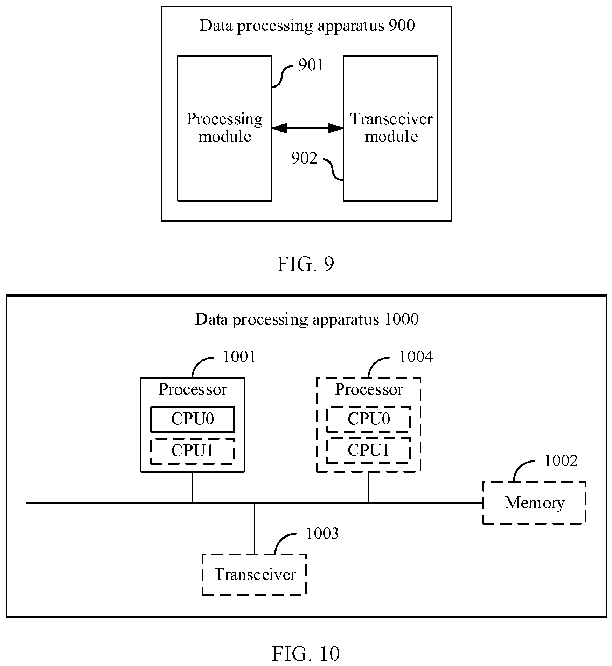

The foregoing describes in detail the data processing method provided in embodiments of this application with reference to FIG. 2 to FIG. 8. To implement the functions in the foregoing methods provided in embodiments of this application, the terminal device and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. With reference to FIG. 9 and FIG. 10, the following describes in detail a data processing apparatus configured to perform the data processing method provided in embodiments of this application.

For example, FIG. 9 is a schematic diagram 1 of a structure of a data processing apparatus according to an embodiment of this application. As shown in FIG. 9, the data processing apparatus 900 includes: a processing module 901 and a transceiver module 902. For ease of description, FIG. 9 shows only main components of the data processing apparatus.

In some embodiments, the data processing apparatus 900 is applicable to the communication system shown in FIG. 1, to perform a function of the first node in the method shown in FIG. 2, perform a function of the first network device or the second network device in the method shown in FIG. 7, or perform a function of the first TRP or the second TRP in the method shown in FIG. 8.

If the data processing apparatus 900 is a first node, the transceiver module 902 is configured to perform S201, and the processing module 901 is configured to perform S202.

If the data processing apparatus 900 is the first network device or the second network device, the transceiver module 902 is configured to perform S703, S706 to S709, S712 and S713, and S715. The processing module 901 is configured to perform S701 and S702, S704 and S705, S710 and S711, and S716 to S719.

If the data processing apparatus 900 is a first TRP or a second TRP, the transceiver module 902 is configured to perform S802, S805, S808 to S811, S814 and S815, and S817. The processing module 901 is configured to perform S802 to S804, S806 and S807, S812 and S813, and S818 to S820.

Optionally, the transceiver module 902 may include a receiving module and a sending module (not shown in FIG. 9). The receiving module is configured to implement a receiving function of the data processing apparatus 900. The sending module is configured to implement a sending function of the data processing apparatus 900.

Optionally, the data processing apparatus 900 may further include a storage module (not shown in FIG. 9), and the storage module stores a program or instructions. When the processing module 901 executes the program or the instructions, the data processing apparatus 900 may perform the method shown in any one of FIG. 2, FIG. 7, or FIG. 8.

It should be understood that the processing module 901 involved in the data processing apparatus 900 may be implemented by a processor, a processor-related circuit component, or a logic circuit, and may be a processor or a processing unit; and the transceiver module 902 may be implemented by a transceiver, a transceiver-related circuit component, or an input/output interface, and may be a transceiver or a transceiver unit.

It should be noted that the data processing apparatus 900 may be a terminal device or a network device, or may be a chip (system) or another component or component that may be disposed in a terminal device or a network device, or may be an apparatus that includes a terminal device or a network device. This is not limited in this application.

In addition, for a technical effect of the data processing apparatus 900, refer to a technical effect of the method shown in any one of FIG. 2, FIG. 7, or FIG. 8. Details are not described herein again.

In some other embodiments, the data processing apparatus 900 may be applied to the communication system shown in FIG. 1, and perform a function of the first device in the method shown in any one of FIG. 2, FIG. 7, or FIG. 8.

The transceiver module 902 is configured to perform steps such as S703, S712 and S713, S715, S805, S814 and S815, and S817.

The processing module 901 is configured to perform steps such as S714 and S816.

Optionally, the data processing apparatus 900 may further include a storage module (not shown in FIG. 9), and the storage module stores a program or instructions. When the processing module 901 executes the program or the instructions, the data processing apparatus 900 may perform the method shown in any one of FIG. 2, FIG. 7, or FIG. 8.

It should be understood that the processing module 901 involved in the data processing apparatus 900 may be implemented by a processor or a processor-related circuit component, and may be a processor or a processing unit; and the transceiver module 902 may be implemented by a transceiver or a transceiver-related circuit component, and may be a transceiver or a transceiver unit.

It should be noted that the data processing apparatus 900 may be a terminal device or a network device, or may be a chip (system) or another component or component that may be disposed in a terminal device or a network device, or may be an apparatus that includes a terminal device or a network device. This is not limited in this application.

In addition, for a technical effect of the data processing apparatus 900, refer to a technical effect of the method shown in any one of FIG. 2, FIG. 7, or FIG. 8. Details are not described herein again.

For example, FIG. 10 is a schematic diagram 2 of a structure of a data processing apparatus 1000 according to an embodiment of this application. The data processing apparatus 1000 may be a terminal device or a network device, or may be a chip (system) or another component or component that may be disposed in a terminal device or a network device. As shown in FIG. 10, communication may include a processor 1001. Optionally, the data processing apparatus 1000 may further include a memory 1002 and/or a transceiver 1003. The processor 1001 is coupled to the memory 1002 and the transceiver 1003, for example, may be connected through a communication bus.

The following describes components of the data processing apparatus 1000 in detail with reference to FIG. 10.

The processor 1001 is a control center of the data processing apparatus 1000, and may be one processor, or may be a collective name of a plurality of processing elements. For example, the processor 1001 is one or more central processing units (central processing unit, CPU), or may be an application-specific integrated circuit (application-specific integrated circuit, ASIC), or is configured as one or more integrated circuits that implement embodiments of this application, for example, one or more microprocessors (digital signal processor, DSP), or one or more field programmable gate arrays (field programmable gate array, FPGA).

Optionally, the processor 1001 may execute various functions of the data processing apparatus 1000 by running or executing a software program stored in the memory 1002 and invoking data stored in the memory 1002, such as various possible implementation methods in the foregoing method embodiments.

In a specific implementation, in an embodiment, the processor 1001 may include one or more CPUs, for example, a CPU 0 and a CPU 1 shown in FIG. 10.

In a specific implementation, in an embodiment, the data processing apparatus 1000 may alternatively include a plurality of processors, for example, the processor 1001 and the processor 1004 shown in FIG. 10. Each of the processors may be a single-core processor (single-CPU) or may be a multi-core processor (multi-CPU). The processor herein may be one or more devices, circuits, and/or processing cores configured to process data (for example, a computer program instruction).

The memory 1002 is configured to store a software program for executing the solutions of this application, and the processor 1001 controls execution of the software program. For specific implementation, refer to the foregoing method embodiment. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, and a Blu-ray disc), magnetic disk storage media, or another magnetic storage device, or any another medium that can be used to carry or store desired program code in the form of instructions or a data structure and that can be accessed by a computer, but not limited thereto. The memory 1002 may be integrated with the processor 1001, or may exist independently, and is coupled to the processor 1001 through an interface circuit (not shown in FIG. 10) of the data processing apparatus 1000. This is not specifically limited in embodiments of this application.

The transceiver 1003 is configured to communicate with another apparatus. For example, the data processing apparatus 1000 is a terminal device, and the transceiver 1003 may be configured to communicate with a network device or communicate with another terminal device. For another example, the data processing apparatus 1000 is a network device, and the transceiver 1003 may be configured to communicate with a terminal device or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the data processing apparatus 1000. This is not specifically limited in embodiments of this application.

It should be noted that a structure of the data processing apparatus 1000 shown in FIG. 10 does not constitute a limitation on the apparatus. An actual apparatus may include more or fewer components than those shown in the figure, or combine some components, or have different component arrangements.

In addition, for a technical effect of the data processing apparatus 1000, refer to the technical effect of the method described in the foregoing method embodiment. Details are not described herein again.

All or some of the foregoing embodiments may be implemented using software, hardware (such as a circuit), firmware, or any combination thereof. When software is used to implement embodiments, all or some of the foregoing embodiments may be implemented in a form of a computer program product. The computer program product includes one or more computer instructions or computer programs. When computer instructions or a computer program are/is loaded or executed on a computer, all or some of the procedures or functions according to embodiments of this application are generated. The computer may be a general-purpose computer, a dedicated computer, a computer network, or other programmable apparatuses. The computer instructions may be stored on a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid state drive.

Based on a same concept as the foregoing method embodiment, embodiments of this application further provide a computer-readable storage medium, where the computer-readable storage medium stores a computer program, and the computer program is executed by hardware (for example, a processor), to implement some or all steps of any method performed by any apparatus in embodiments of this application.

Based on a same concept as the foregoing method embodiments, embodiments of this application further provide a computer program product including program instructions. When the computer program product runs on a computer, the computer is enabled to perform some or all steps of any method in the foregoing aspects.

Based on a same concept as that in the foregoing method embodiments, this application further provides a chip or a chip system. The chip may include a processor. The chip may further include a memory (or a storage module) and/or a transceiver (or a communication module), or the chip is coupled to the memory (or a storage module) and/or the transceiver (or a communication module). The transceiver (or the communication module) may be configured to support the chip in performing wired and/or wireless communication, and the memory (or the storage module) may be configured to store a program. The processor may invoke the program to implement an operation performed by the first device and/or node in the foregoing method embodiments and any possible implementation of the method embodiments. The chip system may include the foregoing chips, or may include the foregoing chips and another discrete component, such as the memory (or the storage module) and/or the transceiver (or the communication module).

Based on a same concept as that in the foregoing method embodiments, this application further provides a communication system. The communication system may include the first device and/or the node. The communication system may be configured to implement an operation performed by the first device and/or the node in the foregoing method embodiments and any possible implementation of the method embodiments. For example, the communication system may have a structure shown in FIG. 1.

It should be understood that the term "and/or" in this specification describes only an association relationship for describing associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, each functional unit in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, applied to a first node, wherein the first node has an adjacent relationship with a second node, the first node and the second node are configured to execute a same type of task, and the method comprises:

   obtaining first data; and
   determining a processing result of the first data through a first neural network, wherein the first neural network is determined based on a combination of first neural network parameter sets, and a quantity of first neural network parameter sets in the combination is positively correlated to a quantity of second nodes.

2. The data processing method according to claim 1, wherein
the first neural network comprises: N hidden layers, wherein an $i^{th}$ hidden layer comprises $M_i$ parameter subsets, m parameter subsets in the $M_i$ parameter subsets are the same, the $M_i$ parameter subsets are determined based on the combination of first neural network parameter sets, N is a positive integer, i is a positive integer less than or equal to N, $M_i$ is an integer greater than 1, and m is an integer less than or equal to M and greater than 1.

3. The data processing method according to claim 1 or 2, wherein
the first neural network parameter set comprises: a first parameter subset and/or a second parameter subset.

4. The data processing method according to claim 3, wherein a neural network structure of the $i^{th}$ hidden layer is represented as:

$$\mathbf{W}^{i-1,i} = \begin{bmatrix} \mathbf{S}^{i-1,i} & \mathbf{O}^{i-1,i} & \dots & \mathbf{O}^{i-1,i} \\ \mathbf{O}^{i-1,i} & \mathbf{S}^{i-1,i} & \dots & \mathbf{O}^{i-1,i} \\ \vdots & \vdots & \ddots & \vdots \\ \mathbf{O}^{i-1,i} & \mathbf{O}^{i-1,i} & \dots & \mathbf{S}^{i-1,i} \end{bmatrix},$$

wherein $\mathbf{W}^{i-1,i}$ is used to represent the neural network structure of the $i^{th}$ hidden layer, $\mathbf{S}^{i-1,i}$ is determined based on the first parameter subset corresponding to the $i^{th}$ hidden layer, and $\mathbf{O}^{i-1,i}$ is determined based on the second parameter subset corresponding to the $i^{th}$ hidden layer.

5. The data processing method according to claim 4, wherein
a quantity of rows in $\mathbf{W}^{i-1,i}$ is positively correlated to the quantity of second nodes, and a quantity of columns in $\mathbf{W}^{i-1,i}$ is positively correlated to the quantity of second nodes.

6. The data processing method according to claim 3 or 4, wherein
if the quantity of second nodes changes from a first quantity to a second quantity, in the combination of first neural network parameter sets, a quantity of first parameter subsets is correspondingly adjusted from a third quantity to a fourth quantity, and a quantity of second parameter subsets is correspondingly adjusted from a fifth quantity to a sixth quantity.

7. The data processing method according to any one of claims 1 to 6, wherein after the determining a processing result of the first data, the method further comprises:

   determining a second neural network parameter set, wherein the second neural network parameter set is determined based on the processing result and the first neural network; and
   sending the second neural network parameter set.

8. The data processing method according to any one of claims 1 to 7, wherein
the second node is determined by one or more of the following: an area in which a node is located, a type of a node, a network to which a node belongs, or a user served by a node.

9. A data processing method, applied to a first device, wherein the method comprises:

   determining a first neural network parameter set, wherein a first neural network is determined based on a combination of first neural network parameter sets, a quantity of first neural network parameter sets in the combination is positively correlated to a quantity of second nodes, the second node has an adjacent relationship with a first node, and the second node and the first node are configured to execute a same type of task; and
   sending the first neural network parameter set.

10. The data processing method according to claim 9, wherein after the sending the first neural network parameter set, the method further comprises:
obtaining a second neural network parameter set, wherein the second neural network parameter set is determined based on a processing result of first data and the first neural network.

11. The data processing method according to claim 9 or 10, wherein after the obtaining a second neural network parameter set, the method further comprises:
determining a fourth neural network parameter set based on the second neural network parameter set and a third neural network parameter set, wherein the third neural network parameter set is determined by the second node, and the fourth neural network parameter set is used to update the first neural network.

12. A data processing method, applied to a first node, wherein the first node has an adjacent relationship with a second node, the first node and the second node are configured to execute a same type of task, and the method comprises:

   obtaining a first neural network parameter set;

determining a first neural network based on a combination of first neural network parameter sets, wherein a quantity of first neural network parameter sets in the combination is positively correlated to a quantity of second nodes; and

determining a processing result of first data through the first neural network.

13. A data processing apparatus, applied to a first node, wherein the first node has an adjacent relationship with a second node, the first node and the second node are configured to execute a same type of task, and the apparatus comprises: a transceiver module and a processing module, wherein

the transceiver module is configured to obtain first data; and

the processing module is configured to determine a processing result of the first data through a first neural network, wherein the first neural network is determined based on a combination of first neural network parameter sets, and a quantity of first neural network parameter sets in the combination is positively correlated to a quantity of second nodes.

14. The data processing apparatus according to claim 13, wherein

the first neural network comprises: N hidden layers, wherein an $i^{th}$ hidden layer comprises $M_i$ parameter subsets, m parameter subsets in the $M_i$ parameter subsets are the same, the $M_i$ parameter subsets are determined based on the combination of first neural network parameter sets, N is a positive integer, i is a positive integer less than or equal to N, $M_i$ is an integer greater than 1, and m is an integer less than or equal to M and greater than 1.

15. The data processing apparatus according to claim 13 or 14, wherein

the first neural network parameter set comprises: a first parameter subset and/or a second parameter subset.

16. The data processing apparatus according to claim 15, wherein a neural network structure of the $i^{th}$ hidden layer is represented as:

$$\mathbf{W}^{i-1,i} = \begin{bmatrix} \mathbf{S}^{i-1,i} & \mathbf{O}^{i-1,i} & ... & \mathbf{O}^{i-1,i} \\ \mathbf{O}^{i-1,i} & \mathbf{S}^{i-1,i} & ... & \mathbf{O}^{i-1,i} \\ \vdots & \vdots & \ddots & \vdots \\ \mathbf{O}^{i-1,i} & \mathbf{O}^{i-1,i} & ... & \mathbf{S}^{i-1,i} \end{bmatrix},$$

wherein $\mathbf{W}^{i-1,i}$ is used to represent the neural network structure of the $i^{th}$ hidden layer, $S^{i-1,i}$ is determined based on the first parameter subset corresponding to the $i^{th}$ hidden layer, and $\mathbf{O}^{i-1,i}$ is determined based on the second parameter subset corresponding to the $i^{th}$ hidden layer.

17. The data processing apparatus according to claim 16, wherein

a quantity of rows in $\mathbf{W}^{i-1,i}$ is positively correlated to the quantity of second nodes, and a quantity of columns in $\mathbf{W}^{i-1,i}$ is positively correlated to the quantity of second nodes.

18. The data processing apparatus according to claim 16 or 17, wherein

if the quantity of second nodes changes from a first quantity to a second quantity, in the combination of first neural network parameter sets, a quantity of first parameter subsets is correspondingly adjusted from a third quantity to a fourth quantity, and a quantity of second parameter subsets is correspondingly adjusted from a fifth quantity to a sixth quantity.

19. The data processing apparatus according to any one of claims 13 to 18, wherein after the processing module determines the processing result of the first data,

the processing module is further configured to determine a second neural network parameter set, wherein the second neural network parameter set is determined based on the processing result and the first neural network; and

the transceiver module is further configured to send the second neural network parameter set.

20. The data processing apparatus according to any one of claims 13 to 19, wherein

the second node is determined by one or more of the following: an area in which a node is located, a type of a node, a network to which a node belongs, or a user served by a node.

21. A data processing apparatus, applied to a first device, and the apparatus comprising: a transceiver module and a processing module, wherein

the processing module is configured to determine a first neural network parameter set, wherein a first neural network is determined based on a combination of first neural network parameter sets, a quantity of first neural network parameter sets in the combination is positively correlated to a quantity of second nodes, the second node has an adjacent relationship with a first node, and the second node and the first node are configured to execute a same type of task; and
the transceiver module is configured to send the first neural network parameter set.

22. The data processing apparatus according to claim 21, wherein after the sending, by the transceiver module, the first neural network parameter set,
the transceiver module is further configured to obtain a second neural network parameter set, wherein the second neural network parameter set is determined based on a processing result of first data and the first neural network.

23. The data processing apparatus according to claim 21 or 22, wherein after the obtaining, by the transceiver module, a second neural network parameter set,
the processing module is further configured to determine a fourth neural network parameter set based on the second neural network parameter set and a third neural network parameter set, wherein the third neural network parameter set is determined by the second node, and the fourth neural network parameter set is used to update the first neural network.

24. A data processing apparatus, applied to a first node, wherein the first node has an adjacent relationship with a second node, the first node and the second node are configured to execute a same type of task, and the apparatus comprises: a transceiver module and a processing module, wherein

the transceiver module is configured to obtain a first neural network parameter set;
the processing module is configured to determine a first neural network based on a combination of first neural network parameter sets, wherein a quantity of first neural network parameter sets in the combination is positively correlated to a quantity of second nodes; and
the processing module is further configured to determine a processing result of first data through the first neural network.

25. A data processing apparatus, comprising a processor, wherein the processor is coupled to a memory; and
the processor is configured to execute a computer program stored in the memory, to cause the apparatus to perform the method according to any one of claims 1 to 8, or perform the method according to any one of claims 9 to 11, or perform the method according to claim 12.

26. A data processing apparatus, comprising a processor and a memory, where the memory is configured to store computer instructions; and when the processor executes the instructions, the apparatus is enabled to perform the method according to any one of claims 1 to 8, or perform the method according to any one of claims 9 to 11, or perform the method according to claim 12.

27. A data processing apparatus, comprising a processor and an interface circuit, wherein the interface circuit is configured to receive code instructions and transmit the code instructions to the processor; and
the processor is configured to run the code instructions to perform the method according to any one of claims 1 to 8, or perform the method according to any one of claims 9 to 11, or perform the method according to claim 12.

28. A data processing apparatus, comprising a processor and a transceiver, wherein the transceiver is configured to exchange information between the apparatus and another apparatus, and the processor executes program instructions, to perform the method according to any one of claims 1 to 8, or perform the method according to any one of claims 9 to 11, or perform the method according to claim 12.

29. A computer-readable storage medium, wherein the computer-readable storage medium comprises a computer program or instructions; and when the computer program or the instructions runs/run on a computer, the method according to any one of claims 1 to 12 is performed.

30. A computer program product, comprising: a computer program or instructions; and when the computer program or the instructions runs/run on a computer, the method according to any one of claims 1 to 12 is performed.

31. A computer program, when run on a computer, causes the method according to any one of claims 1 to 12 to be performed.

32. A communication system, comprising the apparatus according to any one of claims 13 to 20 and the apparatus according to claims 21 to 23.

FIG. 1

FIG. 2

FIG. 3

FIG. 4

FIG. 5

| Determine a first neural network | Training phase | Inference phase | ... | Training phase | Inference phase | ... | Determine an nth neural network | Training phase | ... |

One superframe

Next n superframes

FIG. 6

| First device | First network device | Second network device |
|---|---|---|
| | S701: Determine an adjacent relationship | S702: Determine an adjacent relationship |

S703: Send a first neural network parameter set

| | S704: Determine a first neural network | S705: Determine a second neural network |
|---|---|---|

S706: Data of a first base station

S707: A data label of the first base station

S708: Data of a second base station

S709: A data label of the second base station

| S710: Train the first neural network by using the data of the first base station and the data of the second base station | S711: Train the second neural network by using the data of the first base station and the data of the second base station |
|---|---|

S712: A second neural network parameter set

S713: A third neural network parameter set

S714: Determine a fourth neural network parameter set

S715: Send the fourth neural network parameter set

| S716: Update the first neural network | S717: Update the second neural network |
|---|---|
| S718: Release the first neural network | S719: Release the second neural network |

FIG. 7

| First device | First TRP | Second TRP | Terminal device |
|---|---|---|---|

S801: Obtain channel measurement results of a plurality of TRPs

S802: Broadcast a first message to the plurality of TRPs

S803: Determine an adjacent relationship

S804: Determine an adjacent relationship

S805: Send a first neural network parameter set

S806: Determine a first neural network

S807: Determine a second neural network

S808: Data of a first TRP

S809: A data label of the first TRP

S810: Data of a second TRP

S811: A data label of the second TRP

S812: Train the first neural network by using the data of the first TRP and the data of the second TRP

S813: Train the second neural network by using the data of the first TRP and the data of the second TRP

S814: A second neural network parameter set

S815: A third neural network parameter set

S816: Determine a fourth neural network parameter set

S817: Send the fourth neural network parameter set

S818: Update the first neural network

S819: Update the second neural network

S820: Release the first neural network

S821: Release the second neural network

FIG. 8

FIG. 9

FIG. 10

## INTERNATIONAL SEARCH REPORT

| | International application No. |
|---|---|
| | **PCT/CN2022/077733** |

### A. CLASSIFICATION OF SUBJECT MATTER

G06N 20/00(2019.01)i

According to International Patent Classification (IPC) or to both national classification and IPC

### B. FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; VEN; ENTXTC; CNKI: 神经网络, 集群, 邻接, 节点, 训练, 参数, 集合, 组合, 数量; neural network, cluster, adjacency, node, training, parameter, set, combination, number

### C. DOCUMENTS CONSIDERED TO BE RELEVANT

| Category* | Citation of document, with indication, where appropriate, of the relevant passages | Relevant to claim No. |
|---|---|---|
| X | CN 110738322 A (HANGZHOU HIKVISION DIGITAL TECHNOLOGY CO., LTD.) 31 January 2020 (2020-01-31) <br> description, paragraphs [0005]-[0027] | 1, 3, 6-13, 15, 19-32 |
| A | US 10235625 B1 (CAPITAL ONE SERVICES L.L.C.) 19 March 2019 (2019-03-19) <br> entire document | 1-32 |
| A | WO 2020133317 A1 (HUAWEI TECHNOGOLY CO., LTD.) 02 July 2020 (2020-07-02) <br> entire document | 1-32 |
| A | CN 109871958 A (NEUSOFT MEDICAL SYSTEMS CO., LTD.) 11 June 2019 (2019-06-11) <br> entire document | 1-32 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2022** | **07 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| International application No. |
|---|
| **PCT/CN2022/077733** |

| Patent document cited in search report | | | Publication date (day/month/year) | Patent family member(s) | | | Publication date (day/month/year) |
|---|---|---|---|---|---|---|---|
| CN | 110738322 | A | 31 January 2020 | None | | | |
| US | 10235625 | B1 | 19 March 2019 | CA | 3032674 | A1 | 09 August 2019 |
| | | | | EP | 3525139 | A1 | 14 August 2019 |
| | | | | US | 2019251443 | A1 | 15 August 2019 |
| WO | 2020133317 | A1 | 02 July 2020 | CN | 113597621 | A | 02 November 2021 |
| CN | 109871958 | A | 11 June 2019 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202110304438